# EUROPEAN PATENT SPECIFICATION

(11) **EP 4 513 831 B1**
(45) Date of publication and mention of the grant of the patent: **18.02.2026**
(21) Application number: 24193829.9
(22) Date of filing: 09.08.2024
(51) Int. Cl.: H04L 9/40, G06F 3/12, G06F 21/31, H04N 1/44, G06F 21/60

(54) **SYSTEM, IMAGE FORMING APPARATUS, CONTROL METHOD, AND PROGRAM**
SYSTEM, BILDERZEUGUNGSVORRICHTUNG, STEUERUNGSVERFAHREN UND PROGRAMM
SYSTÈME, APPAREIL DE FORMATION D'IMAGES, PROCÉDÉ DE COMMANDE ET PROGRAMME

(30) Priority: 22.08.2023 JP 2023134576; 27.02.2024 JP 2024027116; 27.02.2024 JP 2024027117; 12.06.2024 JP 2024095035
(43) Date of publication of application: 26.02.2025
(73) Proprietor: Canon Kabushiki Kaisha, Tokyo 146-8501 (JP)
(72) Inventor: HOSODA, Yasuhiro, Tokyo 146-8501 (JP); SHIBAO, Mayumi, Tokyo 146-8501 (JP); TAKEDA, Kyohei, Tokyo 146-8501 (JP); NARITA, Yuki, Tokyo 146-8501 (JP)
(74) Representative: Canon Europe Limited

(56) References cited:
- US-A1- 2019 141 214
- US-A1- 2022 400 014

## Description

### BACKGROUND OF THE INVENTION

### Field of the Invention

The present invention relates to a technique of authenticating a user who uses a device.

### Description of the Related Art

In recent years, a technique such as the FIDO2.0 defined by the Fast Identity Online (FIDO) Alliance has been known as a method for authenticating a user. It is a technique that performs biometric authentication on a terminal that the user has at hand, and verifies data signed using a secret key on the terminal, on an authentication server side.

On the other hand, as in Japanese Patent Application Laid-Open No. 2023-37169, a technique that performs authentication using an integrated circuit (IC) card, or performs authentication based on a password entered by a user has been known as a technique of an image forming apparatus.

Nevertheless, in the technique discussed in Japanese Patent Application Laid-Open No. 2023-37169, it has been unable to provide functions of the image forming apparatus based on the verification of signed data in a terminal, as with the FIDO.

US 2019/141214 A1 discusses an image processing apparatus provided with a biological information sensor receives an authentication request including a verification parameter from a service providing system, transmits the verification parameter to an information processing apparatus provided with an authentication module for biometric authentication, and a tamper-resistant storage device configured to store a user's biological information required when an authentication process is performed by the authentication module and a private key generated with respect to the biological information, transmits the biological information acquired by the biological information sensor using an encryption technique to the information processing apparatus, receives signature data, created using the private key extracted when biometric authentication based on the transmitted biological information has succeeded and the verification parameter, from the information processing apparatus, and transmits the signature data to the service providing system.

### SUMMARY OF THE INVENTION

According to a first aspect of the present invention, there is provided an image forming apparatus as specified in claims 1 to 12. According to a second aspect of the present invention, there is provided a control method as specified in claim 13. According to third aspect of the present invention, there is provided a program as specified in claim 14.

Further features of the present invention will become apparent from the following description of embodiments with reference to the attached drawings.

### BRIEF DESCRIPTION OF THE DRAWING

Fig. 1 is a diagram illustrating a system configuration.
Figs. 2A and 2B are diagrams illustrating a hardware configuration.
Fig. 3 is a diagram illustrating a software configuration.
Fig. 4 is a diagram illustrating information stored in a user database.
Fig. 5 is a diagram illustrating a user interface to be displayed on an operation panel of a multifunction peripheral (MFP).
Fig. 6 is a diagram illustrating a user interface for a setting related to user authentication.
Figs. 7A and 7B are diagrams illustrating a sequence of passkey registration.
Figs. 8A and 8B are diagrams illustrating a sequence of passkey authentication.
Fig. 9 is a diagram illustrating a software configuration of a mobile terminal according to other embodiments.
Fig. 10 is a diagram illustrating a user interface of a mobile terminal in passkey registration.
Fig. 11 is a diagram illustrating a user interface of a mobile terminal in passkey authentication.
Fig. 12 is a diagram illustrating a user interface of a mobile terminal according to other embodiments.
Fig. 13 is a diagram illustrating a user interface to be displayed on an operation panel of an MFP.
Fig. 14 is a diagram illustrating a user interface for a setting related to simple login.
Figs. 15A and 15B are a flowchart illustrating processing to be executed when simple login is enabled.
Fig. 16 is a diagram illustrating a system configuration according to a third embodiment.
Fig. 17 is a diagram illustrating a hardware configuration of an MFP login server.
Fig. 18 is a diagram illustrating a software configuration according to the third embodiment.
Fig. 19 is a diagram illustrating account information.
Fig. 20 is a diagram illustrating MFP management information.
Fig. 21 is a diagram illustrating a user interface related to a setting.
Fig. 22 is a diagram illustrating a user interface related to login.
Fig. 23 is a diagram illustrating communication between an MFP and an MFP login server.
Fig. 24 is a diagram illustrating a flow of processing to be executed by a central processing unit (CPU).
Fig. 25 is a diagram illustrating an example of an operation screen and an operation flow of a mobile terminal.
Figs. 26A and 26B are diagrams illustrating a flow of processing related to passkey registration.
Figs. 27A and 27B are diagram illustrating a flow of processing related to passkey authentication.
Fig. 28 is a diagram illustrating an operation screen of a mobile terminal that is to be displayed in a case where an MFP application is to be used.
Fig. 29 is a diagram illustrating a user interface to be displayed on an operation panel of an MFP according to a fifth embodiment.
Figs. 30A and 30B are diagrams illustrating a flow of processing for passkey registration and passkey authentication according to a fifth embodiment.

### DESCRIPTION OF THE EMBODIMENTS

Hereinafter, embodiments of the present invention will be described with reference to the drawings. Each of the embodiments of the present invention described below can be implemented solely or as a combination of a plurality of the embodiments or features thereof where necessary or where the combination of elements or features from individual embodiments in a single embodiment is beneficial.

An embodiment of the present invention will be described using an example of a multifunction peripheral (MFP) having functions such as copy, print, and scan, as an example of an image forming apparatus to which the present invention is applied.

In the present embodiment, as a system of authentication that allows a user to use a function or a service provided by an image forming apparatus, a digital signature verification technique as used also in Fast Identity Online (FIDO) is employed. Specifically, the technique described in the present embodiment relates to a system for authenticating a user by performing biometric authentication on a mobile terminal (information processing apparatus) that the user has at hand and verifying digital signature data output as a result of the biometric authentication, on an image forming apparatus side. As described below, as one of features of the present embodiment, a digital function corresponding to a FIDO service to be provided by the FIDO technique is installed on the image forming apparatus. Although the FIDO is mentioned as an example of such a system, it is to be preliminarily noted that the present invention is not limited to a standard defined by the FIDO Alliance. In addition, authentication to be performed on the mobile terminal is not limited to biometric authentication. As described below, the authentication to be performed on the mobile terminal may be authentication that uses a passcode, for example.

### <System Configuration>

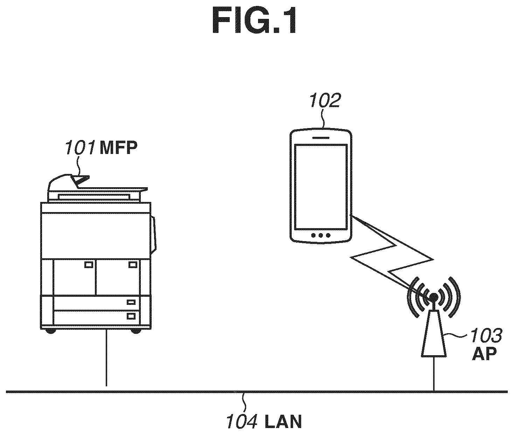

A system configuration according to a first embodiment will be described with reference to Fig. 1. An MFP 101 is an MFP to which the present invention is applied. A mobile terminal 102 is a mobile terminal such as a smartphone. The mobile terminal is a terminal equipped with an iPhone operating system (iOS) of Apple Inc., or a terminal equipped with Android^{®} of the Google LLC. The mobile terminal 102 can communicate with the MFP 101 via an access point 103 of a wireless local area network (LAN) or a wired LAN 104.

In a case where the MFP 101 has a wireless LAN access point function, the mobile terminal 102 may directly communicate with the MFP 101 by connecting to the wireless LAN access point function of the MFP 101.

### <Hardware Configuration of MFP 101>

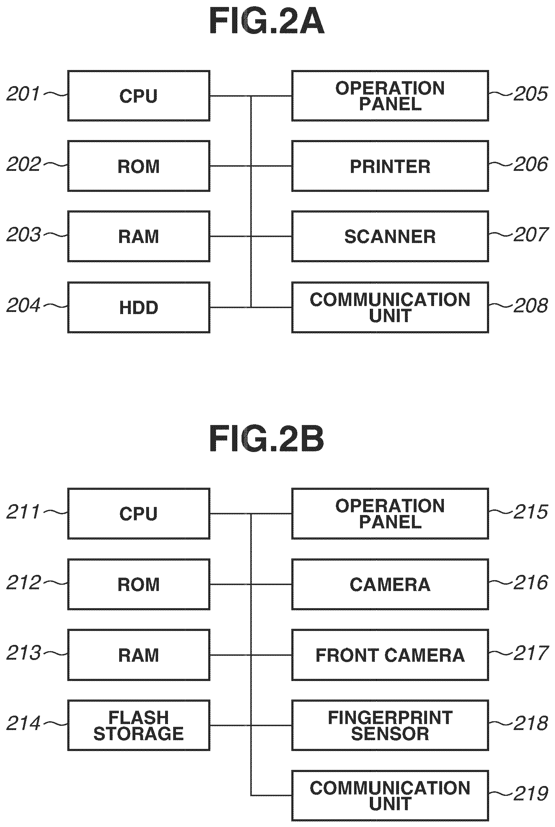

Fig. 2A is a schematic diagram illustrating a hardware configuration of the MFP 101. A CPU 201 is a central processing unit (processor) that controls an operation of the entire MFP 101. A Random Access Memory (RAM) 203 is a volatile memory, functions as a work area, and is used as a temporary storage area for loading various control programs stored in a read-only memory (ROM) 202 and a hard disk drive (HDD) 204.

The ROM 202 is a volatile memory and stores a boot program of the MFP 101. The HDD 204 is a nonvolatile hard disk or a flash storage having large capacity as compared with the RAM 203. The HDD 204 stores an MFP control program. The HDD 204 also stores an operating system (OS) and an application program.

When activating the MFP 101, the CPU 201 executes the boot program stored in the ROM 202. This boot program is a program for reading out a program of an operating system (OS) that is stored in the HDD 204 and loading the program onto the RAM 203. If the CPU 201 executes the boot program, the CPU 201 subsequently executes the program of the OS that is loaded on the RAM 203 and performs the control of the MFP 101. The CPU 201 also stores, on the RAM 203, data to be used for an operation that is based on a control program to perform reading and writing.

In the MFP 101, one CPU 201 executes each of pieces of processing illustrated in a sequence diagram to be described below, but another configuration may be employed. For example, a configuration in which a plurality of CPUs and microprocessors (MPU) cooperatively execute each of pieces of processing illustrated in a sequence diagram to be described below can be employed. A part of the processing to be described below may be executed using a hardware circuit, such as an application specific integrated circuit (ASIC) or a field-programmable gate array (FPGA).

An operation panel 205 is a touch-operable display (touch panel). A printer 206 is a printer engine that prints print data received from the outside via a communication unit 208 and digital data acquired from a scanner 207. The scanner 207 is a scanner device that reads a paper document and converts an image read from the paper document into digital data. The communication unit 208 is a network interface for connecting to the Internet or a local area network (LAN) of an office.

### <Hardware Configuration of Mobile Terminal 102>

Fig. 2B is a schematic diagram illustrating a hardware configuration of the mobile terminal 102. A CPU 211 is a central processing unit (processor) that controls an operation of the entire mobile terminal 102. A RAM 213 is a volatile memory, functions as a work area, and is used as a temporary storage area for loading various control programs stored in a ROM 212 and a flash storage 214.

The ROM 212 is a volatile memory and stores a boot program of the mobile terminal 102. The flash storage 214 is a nonvolatile memory storage having large capacity as compared with the RAM 213. The flash storage 214 stores a mobile terminal control program. The flash storage 214 also stores an OS and an application program.

An operation panel 215 is a touch-operable display (touch panel).

A camera 216 is a camera module that can be used to take pictures and moving images and read a quick response (QR) code^{®}. A front camera 217 is a camera that can be used to capture images of a user of a mobile terminal and perform face authentication for the user. A fingerprint sensor 218 is a sensor that can be used for fingerprint authentication. A communication unit 219 is a network interface for performing wireless communication.

### <Software Configuration>

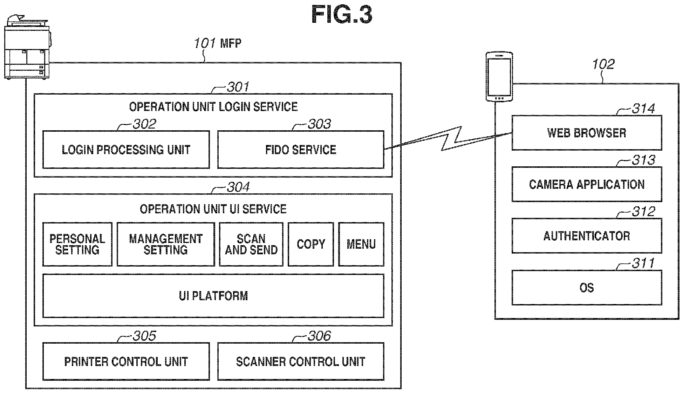

Fig. 3 is a schematic diagram illustrating software configurations of the MFP 101 and the mobile terminal 102. The MFP 101 includes an operation unit login service 301 for authenticating a user who uses the MFP 101. The operation unit login service 301 includes a login processing unit 302 and a FIDO service 303. The login processing unit 302 displays a login screen on the operation panel 205, authenticates the user who uses the operation panel 205, and allows the user to log in to the operation panel 205. The FIDO service 303 has a web server function of enabling communication in compliance with the Hypertext Transfer Protocol (HTTP). The FIDO service 303 also has an authentication function of Web Authentication (WebAuthn) defined by the FIDO Alliance or the World Wide Web Consortium (W3C).

An operation unit user interface (UI) service 304 of the MFP 101 provides a user interface for providing functions to the user who has logged in to the operation panel 205. The operation unit UI service 304 includes a menu for the user to select a function, an application, and a user interface (UI) platform that governs the control of screen transition. For example, the operation unit UI service 304 includes a "copy" application that provides a UI for a copy function to the user, a "print" application that provides a UI for a print function, and a "scan and send" application that provides a UI for transmitting a scanned document to the outside.

A printer control unit 305 is a software module that controls the printer 206, and a scanner control unit 306 is software module that controls the scanner 207. Each software module provides an application programing interface (API) for operating the printer 206 or the scanner 207, to a corresponding application. The software configuration of the MFP 101 includes an operating system (not illustrated) and driver software (not illustrated) for controlling various types of hardware.

The mobile terminal 102 includes an operating system (OS) 311. Depending the terminal, the OS 311 includes the iPhone OS (iOS) of Apple Inc. or the Android^{®} of the Google LLC. An authenticator 312 is software having a FIDO authenticator function defined by the FIDO Alliance. The function of the authenticator 312 may be incorporated into the operating system as a function of the operating system (the OS 311). A camera application 313 is an application that controls the camera 216 and the front camera 217 to take pictures and moving images. The camera application 313 also has a function of reading and decoding a QR code. A web browser 314 is software operating as a client function of performing HTTP communication. The web browser 314 includes Safari of Apple Inc., Chrome of the Google LLC, or Edge of the Microsoft Corporation.

### <User Account>

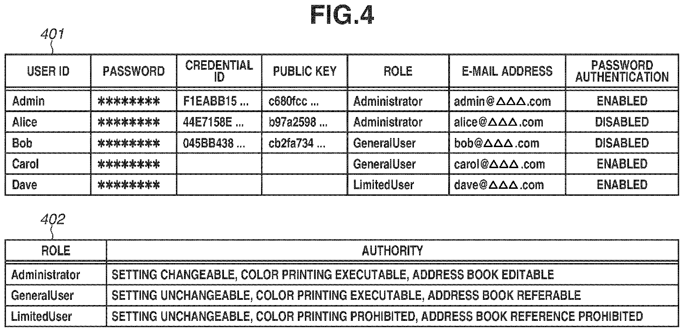

Fig. 4 is a schematic diagram illustrating a user database to be stored in the HDD 204 of the MFP 101. The MFP 101 stores user account information in a user database 401 stored in the HDD 204 and manages the user account information. A database of another node on a network may be used after performing encryption or falsification prevention of a communication path or a storage. In the user database 401, a user identification (ID), a password, passkey information (credential ID, public key) to be used for FIDO authentication, a role, an e-mail address, and an enabled/disabled state of password authentication are recorded.

A "user ID" is an identifier for identifying a user. A "password" is a password to be used in authentication. A "role" is information indicating a use authority of the user on the MFP 101. Examples of each role and a use authority are shown in a role information table 402. In addition to the definition of roles already provided in the MFP 101 at the time of factory shipment, the user may be enabled to create a new role by setting detailed use authority.

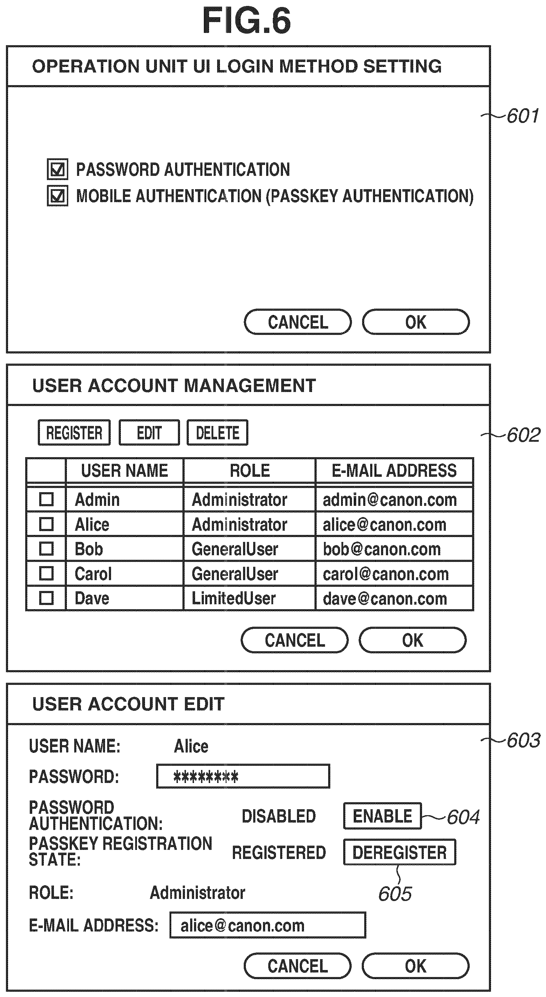

The registration, edit, and deletion of user account information are performed via a UI of a user account management screen 602 or a user account edit screen 603 to be described below with reference to Fig. 6.

A user database is referred to from the operation unit login service 301 to authenticate the user. The passkey information (credential ID, public key) is stored via the FIDO service 303.

### <User Authentication Function>

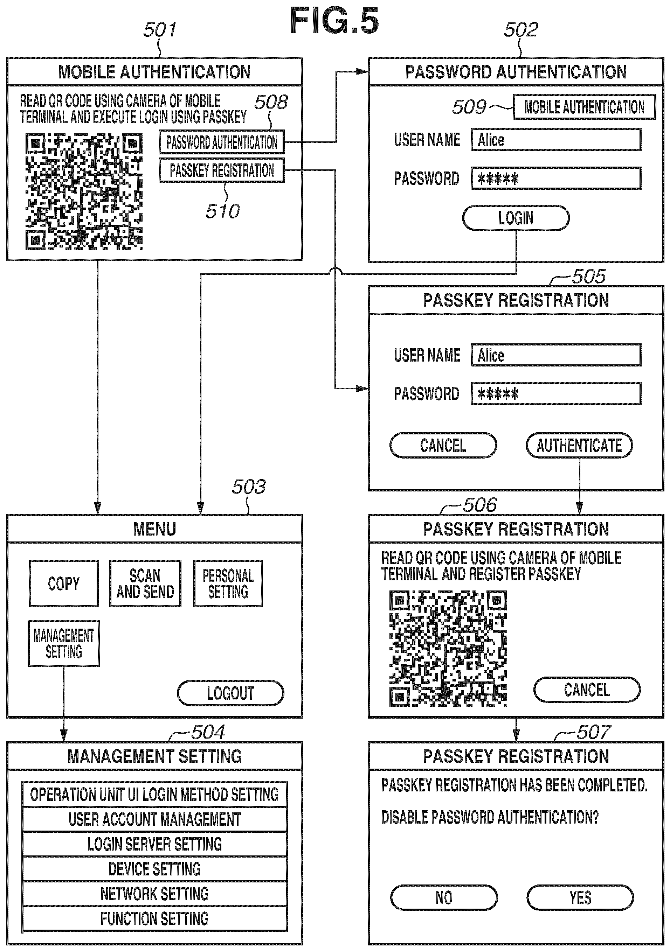

Next, a user authentication function that the MFP 101 has will be described with reference to Figs. 5 and 6. In the present embodiment, two types of user authentication will be described. The first type is authentication that uses a password entered by the user on the operation panel 205. The second type is authentication in which the operation unit login service 301 authenticates the user by a technique that uses a Public Key Infrastructure (PKI) defined by the FIDO. That is, authenticating a user based on a result obtained by verifying, using a public key, signature data obtained by encrypting a challenge using a secret key will be referred to as user authentication. In the present embodiment, aside from the user authentication, authentication for authenticating the owner of a mobile terminal is performed in the mobile terminal. The authentication is authentication in step S715 or in step S814 to be described below. In this manner, in the present embodiment, a plurality of types of authentication exist.

Fig. 5 is a schematic diagram illustrating a login screen to be displayed on the operation panel 205 and a menu screen to be displayed after login. Fig. 6 is a schematic diagram illustrating setting screens for setting a login method and performing user account management. Each screen illustrated in Fig. 6 is displayed when a setting menu is selected from a management setting screen 504 illustrated in Fig. 5.

On a screen of a login method setting 601 of an operation unit UI, a user can select a method to be used when the user logs in to the operation panel 205 by performing user authentication. In the present embodiment, a user operation of selecting an authentication method from options including "password authentication" that uses a password entered by the user and "mobile authentication (passkey authentication)" that uses a passkey including a public key can be received, and the selected authentication method can be enabled. In a case where both the methods are enabled on the screen of the login method setting 601, the login processing unit 302 may receive the selection of an authentication method on a mobile authentication screen 501 and a password authentication screen 502. In the present embodiment, a password authentication button 508 is displayed on the mobile authentication screen 501 to receive the selection of password authentication. In addition, a mobile authentication button 509 is displayed on the password authentication screen 502 to receive the selection of mobile authentication.

The password authentication provides a login method of prompting a user to enter a user ID and a password. Specifically, the login processing unit 302 displays the password authentication screen 502 on the operation panel 205 as a login screen. The user can enter a user ID and a password using hardware keys provided on the MFP 101, or software keys (not illustrated). The login processing unit 302 receives the entry of the user ID and the password via the hardware keys or the software keys. Then, the login processing unit 302 verifies whether user account information that is identical to the combination of the received user ID and password exists in the user database 401. Then, in a case where the user account information exists, it is determined that user authentication has succeeded and a post-login menu screen is displayed.

The mobile authentication (passkey authentication) is cooperatively performed by the login processing unit 302, the FIDO service 303, and the authenticator 312 of the mobile terminal 102. The mobile authentication authenticates the user by using a technique that uses a Public Key Infrastructure (PKI) called a passkey that is defined by the FIDO.

In a case where the mobile authentication (passkey authentication) is enabled, the mobile authentication screen 501 is displayed on the operation panel 205 as a login screen to perform authentication of the user. The registration of a passkey and an authentication method that uses a passkey will be described below in detail.

In a case where both the password authentication and the mobile authentication (passkey authentication) are set to an enabled state, by displaying the password authentication button 508 and the mobile authentication button 509 displayed on the login screens, the user is enabled to use both types of authentication by switching the display of the login screen.

In a case where the authentication of the user is succeeded by the password authentication or the mobile authentication (passkey authentication), the login processing unit 302 allows the user to log in to the operation panel 205.

If the login has succeeded, the operation unit UI service 304 that has detected the login of the user displays a menu screen 503 on the operation panel 205. Then, the operation unit UI service 304 provides functions that are premised on user authentication.

Examples of the functions that are premised on user authentication include a print function to be executed by the printer 206 with a predetermined print setting. In a case where a user assigned with a role of an Administrator or a General User is authenticated, printing with a color print setting becomes executable. In a case where a user assigned with a role of a Limited User is authenticated, printing is permitted only with a monochrome print setting.

Examples of the functions that are premised on user authentication also include a function of transmitting, to an external apparatus, image data obtained by scanning executed by the scanner 207. In a case where a user assigned with a role of an Administrator or a General User is authenticated, the function is provided to the user.

Examples of the functions that are premised on user authentication further include a function of using an address book when designating a transmission destination of image data obtained by scanning executed by the scanner 207. The address book is a list in which information regarding one or a plurality of transmission destinations is registered. A user assigned with a role of a General User can designate a transmission destination of image data by selecting the transmission destination from the address book. A user assigned with a role of an Administrator can register a new transmission destination on the address book and edit the address book, in addition to selecting a transmission destination from the address book.

Examples of the functions that are premised on user authentication further include a function of performing settings of the MFP 101. As displayed on a management setting screen 504, the settings of the MFP 101 include an operation unit UI login method setting, a setting related to each user account, a device setting, and a network setting. In a case where a user assigned with a role of an Administrator is authenticated, these setting functions are provided to enable the user to make the settings of the MFP 101. The device setting includes a setting related to a print job or a scan job, such as a setting indicating whether to display, on the operation panel 205, a history to be recorded in execution of a job. The network setting includes, for example, a setting indicating whether to permit the use of each printing protocol in printing.

### <Simple Login Function>

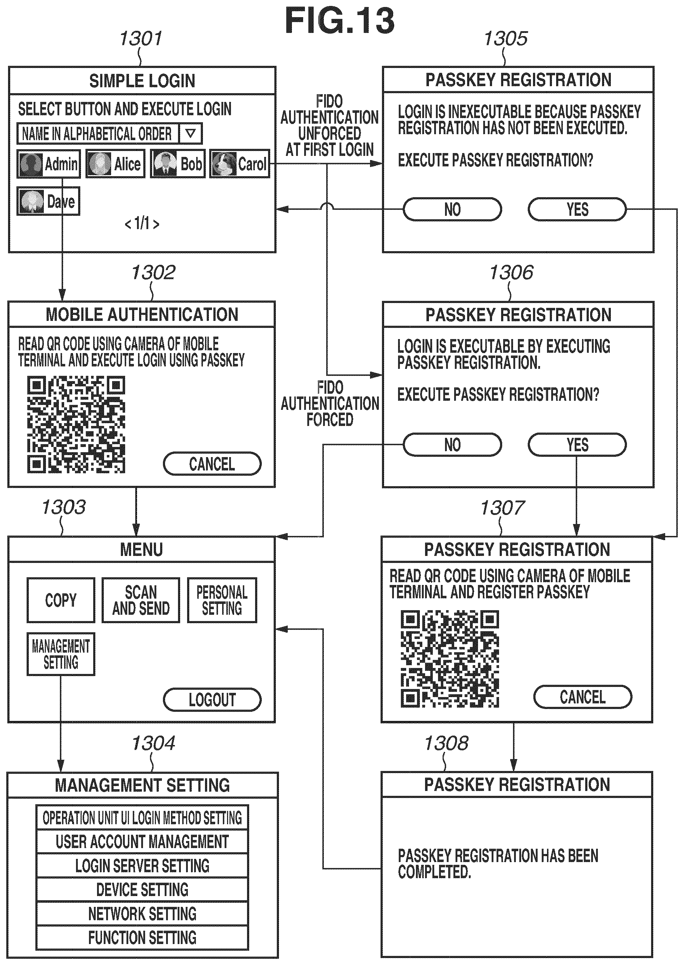

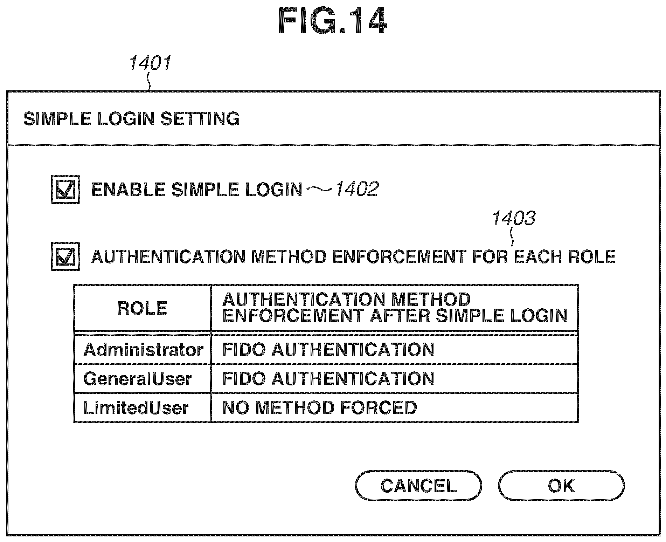

A simple login function that the MFP 101 has will be described with reference to Figs. 13 and 14. Fig. 13 is a schematic diagram illustrating a login screen to be displayed on the operation panel 205, and a menu screen to be displayed after login. Fig. 14 is a schematic diagram illustrating a setting of enabling the simple login function, and a setting of enforcing an authentication method to be used after simple login in accordance with a role illustrated in Fig. 4. For example, in a setting 1403 illustrated in Fig. 14, if the role of a user is an Administrator or a General User, a screen for FIDO authentication is displayed after simple login, and the user is prevented from logging in to the MFP 101 until authentication is executed by FIDO authentication. This enforces the FIDO authentication after simple login. If the role of a user is a Limited User, the screen for FIDO authentication is not displayed after simple login, and the user directly logs in to the MFP 101. That is, authentication after simple login is not forced. The screen illustrated in Fig. 14 is displayed when a setting menu is selected from the management setting screen 504 illustrated in Fig. 5.

If the login processing unit 302 detects that an enabling button 1402 illustrated in a simple login setting screen 1401 has been pressed, the login processing unit 302 enables the simple login function. In a case where the simple login function is enabled, the login processing unit 302 displays, on the login screen, a button or an icon of a user registered in the user database illustrated in Fig. 4. Via the button or the icon, the login processing unit 302 receives, from the user, the selection of a button corresponding to the user's user ID. By causing the user to select a button corresponding to an avatar of the user, the login processing unit 302 allows the user to log in to the MFP 101. That is, the login processing unit 302 performs login processing using a user ID and a password of a user that correspond to a button selected from among the buttons displayed on the login screen. This enables the user to skip the entry of a user ID and a password. To prevent unauthorized login, the simple login can be used in combination with a FIDO service function to be described below. Due to the setting 1403 of authentication method enforcement for each role, it becomes possible to set an authentication method to be forced in combination with the simple login for each user who uses a device.

Fig. 13 illustrates an example of a simple login screen 1301. In a case where it is detected that the user has selected a button on the simple login screen 1301, the login processing unit 302 advances the processing to login processing to allow the user to log in to the operation panel 205. As another possible configuration, a passcode or a pattern may be set for each user, and the user may be allowed to log in to the operation panel 205 by entering a correct passcode or pattern. In this case, in a case where authentication that uses a passcode or a pattern has succeeded, the login processing unit 302 advances the processing to the login processing.

Here, in a case where a button of a user who has executed passkey registration as illustrated in the user database 401 is selected, a mobile authentication screen 1302 is displayed. After FIDO authentication processing has been executed on the mobile authentication screen 1302, the login processing unit 302 allows the user to log in to the operation panel 205.

In a case where a user executes their first login and a passkey of the user is not registered in the user database 401, a registration screen 1306 for prompting the user to execute passkey registration is displayed. In a case where passkey registration is executed, the login processing unit 302 displays a passkey registration screen 1307 and allows the user to log in to the operation panel 205 after the registration processing ends.

In a case where it is determined that the execution of passkey registration is unnecessary, based on the setting 1403 and information indicating whether the login is the first login, the login processing unit 302 allows the user to log in to the operation panel 205.

Next, an operation to be performed when the setting 1403 of authentication method enforcement for each role is enabled will be described. In a case where the setting 1403 of authentication method enforcement for each role is enabled and a user has already executed passkey registration, the mobile authentication screen 1302 is displayed. After the FIDO authentication processing has been executed on the mobile authentication screen 1302, the login processing unit 302 allows the user to log in to the operation panel 205.

In a case where the setting 1403 of authentication method enforcement for each role is enabled and a user has not executed passkey registration, a passkey registration screen 1305 is displayed. In a case where passkey registration is executed, the login processing unit 302 displays the passkey registration screen 1307, and allows the user to log in to the operation panel 205, after the registration processing ends. In a case where passkey registration is not executed, the login processing unit 302 displays the simple login screen 1301, again. If the login has succeeded, the operation unit UI service 304 that has detected the login of the user displays the menu screen 1303 on the operation panel 205.

### <FIDO Service Function>

The FIDO service 303 has a web server function that enables communication in compliance with the HTTP. The FIDO service 303 also has an authentication function of WebAuthn defined by the FIDO Alliance or the W3C.

The FIDO service 303 is accessed via HTTPS communication from the web browser 314 of the mobile terminal 102 that has read a QR code displayed on the mobile authentication screen 501 or a passkey registration screen 506. The FIDO service 303 provides, as a web server, access to the following URL1 to URL6 and functions, for example.
<URL1>
https://mfp101.office.local/LocalUI/registration/random numbers

The URL1 is a uniform resource locator (URL) that returns an HTML for passkey registration. The random numbers in the URL1 correspond to a character string such as "52f3d66abc7519a209af9deld96136c9", for example. The random numbers are identical to a character string to be embedded into a QR code on the passkey registration screen 506.

The HTML for passkey registration that is returned by the URL1 encompasses JavaScript for accessing a Representational State Transfer (REST) API of the following URL2 and URL3. The HTML also encompasses the following JavaScript of WebAuthn defined by the FIDO2.0.
<JavaScript of WebAuthn>
output JavaScript Object Notation (JSON) data = await navigator. credentials. create (input JSON data);
<URL2>
https://mfp101.office.local/LocalUI/registration/challenge

The URL2 is a URL of a REST API that returns input JSON data to be input to the above-described API "navigator.credentials.create()". The input JSON data includes challenge data issued by the FIDO service 303. The challenge corresponds to random numbers, and is verification data to be used in verification for passkey registration.
<URL3>
https://mfp 101.office.local/LocalUI/registration/verification

The URL3 is a URL of a REST API that receives information for passkey registration. Output JSON data output by the above-described API "navigator.credentials.create()" is received. The output JSON data includes a credential ID, a challenge, a public key, and a digital signature issued by the mobile terminal 102.
<URL4>
https://mfp101.office.local/LocalUI/authentication/random numbers

The URL4 is a URL that returns an HTML for passkey authentication. The random numbers correspond to a character string such as "b15dee080a1a549be6e3c74e6b59f5c5", for example. The random numbers are identical to a character string to be embedded into a QR code on the mobile authentication screen 501.

The HTML for passkey authentication that is returned by the URL4 encompasses JavaScript for accessing a REST API of the following URL5 and URL6. The HTML also encompasses the following JavaScript of WebAuthn defined by the FIDO2.0.
<JavaScript of WebAuthn>
output JSON data = await navigator. credentials. get (input JSON data);
<URL5>
https://mfp 101. office.local/LocalUI/authentication/challenge

The URL5 is a URL of a REST API that returns the above-described input JSON data to be input to "navigator.credentials.get()" described above. The input JSON data includes challenge data issued by the FIDO service 303. The challenge corresponds to random numbers, and is verification data to be used in verification for user authentication that uses a passkey.
<URL6>
https://mfp 101.office.local/LocalUI/authentication/verification

The URL6 is a URL of a REST API that receives information for passkey authentication. Output JSON data output by the above-described API "navigator.credentials.get()" is received. The output JSON data includes a credential ID of a passkey used in generating a digital signature, a challenge, a public key, and a digital signature.

### <Passkey Registration Sequence>

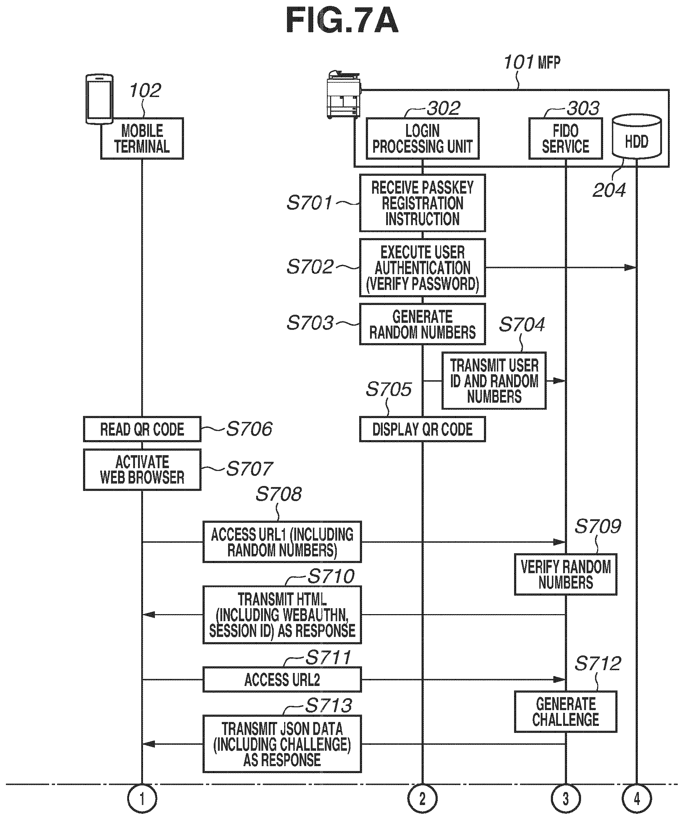

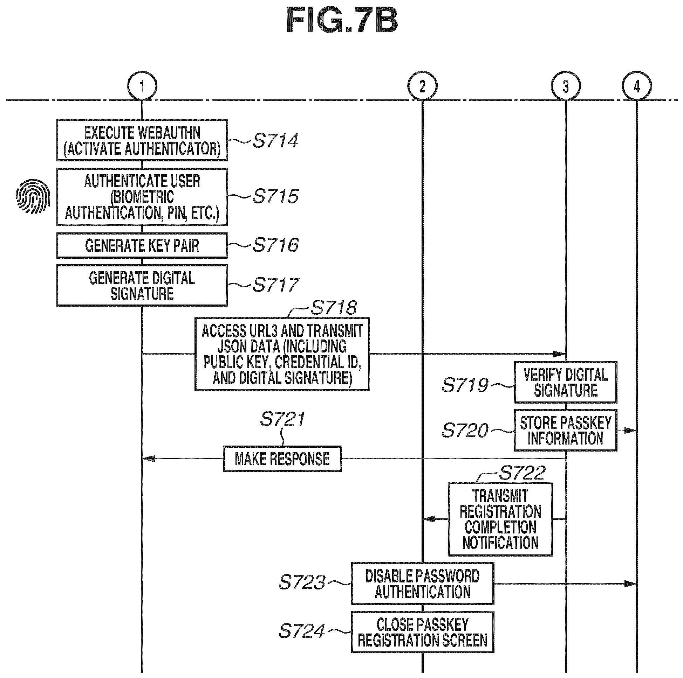

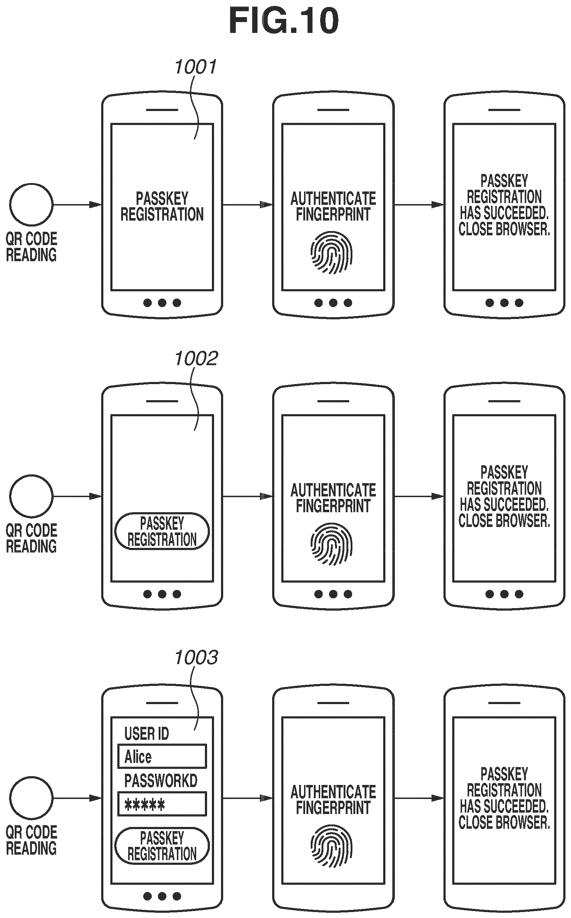

A flow of processing related to passkey registration will be described with reference to a sequence diagram in Figs. 7A and 7B. Fig. 10 illustrates an example of an operation screen of the mobile terminal 102 that is to be displayed at the time of passkey registration. In the present embodiment, a flow of processing to be executed in the MFP 101 is recorded on a software program of the operation unit login service 301 or the FIDO service 303. The software program is stored in a nonvolatile storage, such as the ROM 202 or the HDD 204, and loaded onto the RAM 203, and the flow of processing is accordingly executed by the CPU 201.

In step S701, the login processing unit 302 detects that the user has pressed a passkey registration button 510 on the mobile authentication screen 501.

In step S702, the login processing unit 302 displays, on the operation panel 205, a screen 505 for authenticating the user using a user ID and a password. Then, the login processing unit 302 receives the entry of a user ID and a password via the screen 505. The login processing unit 302 acquires the user ID and the password entered on the screen 505, and authenticates the user. Specifically, the login processing unit 302 refers to a user database stored in the HDD 204, checks a password of a user account information on a user ID identical to the acquired user ID, with the acquired password, and in a case where the passwords are identical, it is determined that user authentication has succeeded. In a case where user authentication has failed, an error is displayed.

In a case where user authentication has succeeded, in step S703, the login processing unit 302 generates random numbers. The random numbers correspond to a character string such as "52f3d66abc7519a209af9deld96136c9", for example.

In step S704, the login processing unit 302 transmits the user ID of the user authenticated in step S702 and the generated random numbers to the FIDO service 303, and shares the user ID and the random numbers with the FIDO service 303. The transmission method may be a method that uses an API or a method of sharing the user ID and the random numbers by temporarily storing them into the RAM 203 or the HDD 204. The method of transmitting them and the timing to transmit them are not specifically limited. Further, random numbers may be generated by the FIDO service 303 or another module instead of the login processing unit 302, and the generated random numbers may be shared with the login processing unit 302.

Next, in step S705, the login processing unit 302 generates a QR code and displays the generated QR code on the passkey registration screen 506. The data of the URL1 including the above-described random numbers is embedded into the QR code. The random numbers correspond to information known only to a person who has read the QR code image, and are intended to confirm that the user who accesses the URL1 is present in front of the operation panel 205.

Next, in step S706, the user activates the camera application 313 from a mobile terminal owned by the user, and reads the QR code displayed on the operation panel 205.

Next, in step S707, the camera application 313 activates the web browser 314.

In step S708, the web browser 314 accesses the address of the URL1 that has been acquired from the QR code.

In step S709, the FIDO service 303 of the MFP 101 detects the access to the URL1. The accessed URL is verified, and in a case where the random numbers acquired in step S704 are not included in the URL, an error, such as HTTP 404 Not Found, is transmitted to the web browser 314 as response. In a case where the random numbers acquired in step S704 are included in the URL, then in step S710, an HTML for an HTML screen 1001 for passkey registration is transmitted as a response. The HTML for passkey registration encompasses JavaScript for accessing a REST API of the URL2 and the URL3. The HTML also encompasses the following JavaScript of WebAuthn defined by the FIDO2.0.
<JavaScript of WebAuthn>
output JSON data = await navigator.credentials.create (input JSON data);

In addition, a header of a communication packet in step S710 includes a session ID to be stored into a Cookie of the web browser 314. The session ID is used to confirm that the access to the URL1 that has performed the verification of random numbers in step S709, and subsequent access to the URL2 and the URL3 are performed in the same session. In a case where the URL2 and the URL3 are directly accessed in a state in which no session ID is stored in the Cookie, the FIDO service 303 can return an error without performing requested processing.

In step S711, the web browser 314 that has received the HTML in step S710 accesses the URL2 by executing JavaScript. At this time, it is desirable to access the URL2 by automatically executing JavaScript without a web browser operation being performed by the user. By using an onload event of JavaScript called at a timing at which the web browser 314 completes the reading of the HTML of the HTML screen 1001, it is possible to automatically execute JavaScript. Alternatively, to access the URL2, a "passkey registration" button as in an HTML screen 1002 may be displayed, and JavaScript may be executed upon the detection of the user's press of the "passkey registration" button.

In step S712, the FIDO service 303 that has received the access to the URL2 performs the generation of a challenge. The challenge corresponds to random numbers.

Next, in step S713, the FIDO service 303 transmits input JSON data including the generated challenge, as a response. The input JSON data also includes information regarding a server of the MFP 101 (e.g., host name or domain name like "mfp101.office.local") and a user ID.

Next, in step S714, the web browser 314 executes the following JavaScript of WebAuthn using the received input JSON data, and activates the authenticator 312.
<JavaScript of WebAuthn>
output JSON data = await navigator.credentials.create (input JSON data);

Next, in step S715, the authenticator 312 authenticates the owner of the mobile terminal 102 using any method of authentication that uses biological information such as face authentication or fingerprint authentication, authentication that uses a passcode, or pattern authentication.

Next, in step S716, the authenticator 312 generates a key pair (secret key and public key of PKI) called a passkey, and a credential ID for identifying a passkey. Then, the authenticator 312 stores the generated key and the credential ID into a tamper-resistant storage area in association with information regarding the server of the MFP 101 (e.g., mfp101.office.local) and a user ID.

Next, in step S717, the authenticator 312 gives a digital signature to the data including the challenge data received in step S713, using the generated secret key. The authenticator 312 returns the output JSON data to the web browser 314. The output JSON data includes the generated public key, the credential ID, and the digital signature.

Next, in step S718, the web browser 314 accesses the URL3, and transmits output JSON data including the public key, the credential ID and the digital signature to the FIDO service 303.

Next, in step S719, the FIDO service 303 verifies the digital signature using the challenge issued by itself in step S712, and the received public key. Specifically, by decoding the digital signature using the received public key, the FIDO service 303 verifies whether the digital signature is identical to the challenge issued by itself. In a case where the digital signature is identical to the challenge, it is determined that the verification of the digital signature has succeeded. In a case where the digital signature is not identical to the challenge, it is determined that the verification of the digital signature has failed. In a case where the verification of the digital signature has succeeded, then in step S720, the FIDO service 303 stores passkey information (public key and credential ID) and a user ID into a user database in the HDD 204 in association with each other.

Next, in step S721, the FIDO service 303 transmits, to the web browser 314, a response indicating whether passkey registration has succeeded.

Next, in step S722, the FIDO service 303 transmits a passkey registration completion notification to the login processing unit 302.

Next, in step S723, the login processing unit 302 displays, on the operation panel 205, a screen 507 for selecting whether to disable password authentication. In a case where it is detected that the user has selected "YES", the login processing unit 302 stores disabling of password authentication into the user database in the HDD 204 in association with a user ID. Control is performed in such a manner that the user who has disabled password authentication cannot execute login using a user ID and a password thereafter, and can log into the operation panel 205 only by mobile authentication (passkey authentication).

Lastly, in step S724, the login processing unit 302 closes the passkey registration screen, and ends passkey registration processing.

In the above-described configuration, an example of authenticating on the operation panel 205 a user who tries to register a passkey has been described. The user may be authenticated on the web browser 314 of the mobile terminal 102. In this case, in step S710, an HTML screen 1003 to be returned by the FIDO service 303 includes text fields for entering a user ID and a password, and the user is prompted to enter a user ID and a password. Furthermore, the FIDO service 303 receives the user ID and the password entered by the user, using the packet in step S711, and authenticates the user by referring to the user database in the HDD 204.

Enabling/disabling of password authentication, the check of a passkey registration state, and passkey registration deletion of each user can be performed on the user account edit screen 603. The user account edit screen 603 is a screen that can be browsed and edited by a user serving as an administrator user assigned with a role of an Administrator having an authority to change a management setting of the MFP 101. If the operation unit login service 301 authenticates an administrator user assigned with a role of an Administrator, the operation unit UI service 304 displays the menu screen 503. If the operation unit UI service 304 receives the selection of a management setting on the menu screen 503, the operation unit UI service 304 displays the management setting screen 504. Then, if the operation unit UI service 304 receives the selection of "user account management" on the management setting screen 504, the operation unit UI service 304 displays the user account management screen 602. On the user account management screen 602, the administrator user selects a user whose account is desired to be edited, and presses an edit button. If the operation unit UI service 304 detects the press of the edit button, the operation unit UI service 304 displays the user account edit screen 603 for the selected user. If the operation unit login service 301 authenticates a general user who has been assigned with a role of a General User, the operation unit UI service 304 displays the menu screen 503, but performs control in such a manner as not to receive the selection of the management setting. Accordingly, the general user cannot browse the user account management screen 602. The general user can press a "personal setting" button displayed on the menu screen 503. If the operation unit UI service 304 detects the press of the "personal setting" button, the operation unit UI service 304 display the user account edit screen 603 for the account of the logged-in general user.

On the user account edit screen 603, by pressing the enabling button 604, it is possible to enable disabled password authentication, again. In a case where "a passkey has been registered" and "password authentication is enabled", a disabling button is displayed in place of the enabling button 604so that password authentication can be disabled. If "password authentication" is disabled in a case where "a passkey has not been registered", the user has no way to execute login. Thus, in a case where "a passkey has not been registered", disabling of "password authentication" may be made inexecutable. In a case where a passkey has been registered, by pressing a registration deletion (deregister) button 605, the registration of the passkey can be deleted. If the passkey registration is deleted, the user becomes unable to execute login using a passkey, it is desirable to automatically enable disabled password authentication.

In a case where a passkey has not been registered, "unregistered" is displayed as a passkey registration state. In a case where a passkey has not been registered, the registration deletion button 605 is displayed in a grayout state or hidden.

### <Passkey Authentication Sequence>

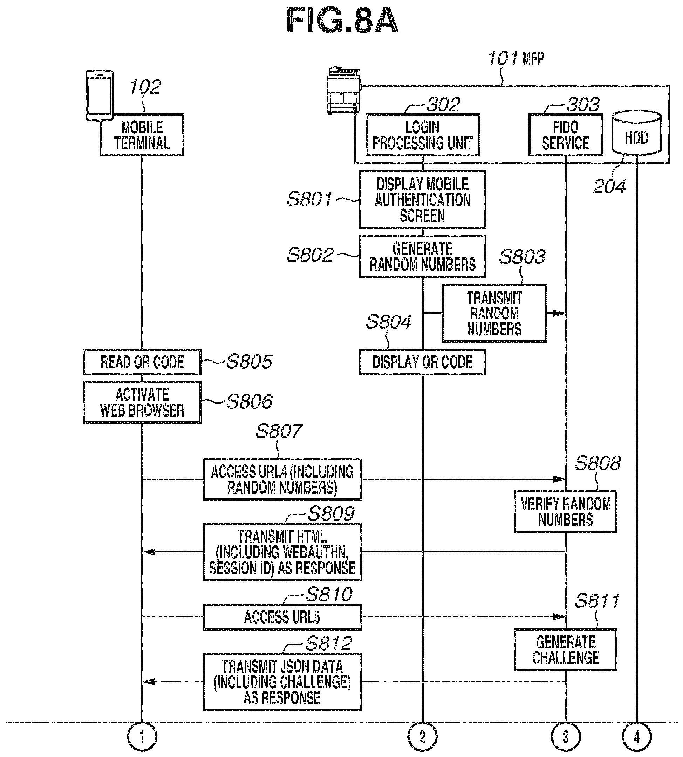

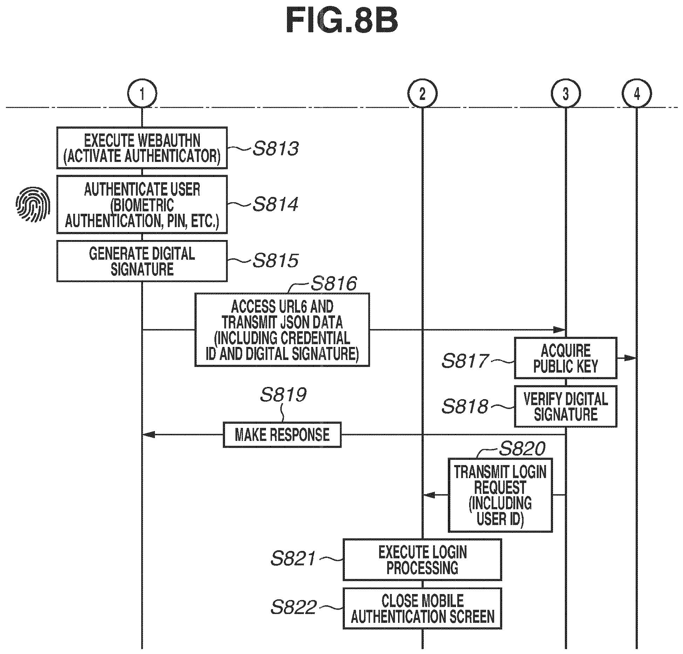

A flow of processing for login that uses a passkey will be described with reference to a sequence diagram in Figs. 8A and 8B.

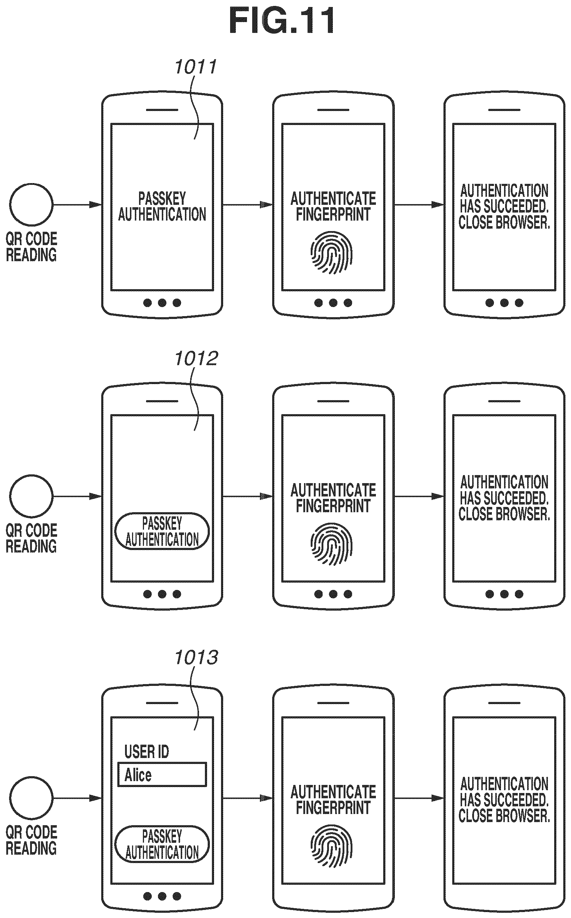

Fig. 11 illustrates an example of an operation screen that is to be displayed on the mobile terminal 102 at the time of passkey authentication.

In step S801, in a case where the user has not executed login, the login processing unit 302 starts the display of the mobile authentication screen 501. For example, if a logged-in user executes logout, the login processing unit 302 displays the mobile authentication screen 501. Also, the login processing unit 302 may be configured to display the mobile authentication screen 501 if the power of the MFP 101 is turned on.

In step S802, the login processing unit 302 generates random numbers. The random numbers correspond to a character string such as "b15dee080a1aS49bebde3c74e6b59f5c5", for example.

Next, in step S803, the login processing unit 302 transmits the generated random numbers to the FIDO service 303 and shares the random numbers with the FIDO service 303. The transmission method may be a method that uses an API or a method of sharing the random numbers by temporarily storing the random numbers into the RAM 203 or the HDD 204. The method for transmitting the random numbers and the timing to transmit the random numbers are not specifically limited. Random numbers may be generated by the FIDO service 303 or another module instead of the login processing unit 302, and the generated random numbers may be shared with the login processing unit 302.

Next, in step S804, the login processing unit 302 generates a QR code, and performs display control in such a manner as to display the generated QR code on the mobile authentication screen 501. Data of the URL4 including the above-described random numbers is embedded into the QR code. The random numbers correspond to information known only to a person who has read the QR code image, and are intended to confirm that the user who accesses the URL4 is present in front of the operation panel 205.

Next, in step S805, the user activates the camera application 313 from a mobile terminal owned by the user themselves, and reads the QR code displayed on the operation panel 205.

Next, in step S806, the camera application 313 activates the web browser 314.

Next, in step S807, the web browser 314 accesses the address of the URL4 that has been acquired from the QR code.

In step S808, the FIDO service 303 of the MFP 101 detects the access to the URL4. The accessed URL is verified, and in a case where the random numbers acquired in step S803 are not included in the URL, an error, such as HTTP 404 Not Found, is transmitted to the web browser 314 as response. In a case where the random numbers acquired in step S803 are included in the URL, then in step S809, an HTML of an HTML screen 1011 for passkey authentication is transmitted as a response. The HTML for passkey authentication encompasses JavaScript for accessing a REST API of the URL5 and the URL6. The HTML also encompasses the following JavaScript of WebAuthn defined by the FIDO2.0.
<JavaScript of WebAuthn>
output JSON data = await navigator. credentials. get (input JSON data);

In addition, a header of a communication packet in step S809 includes a session ID to be stored into a Cookie of the web browser 314. The session ID is used to confirm that the access to the URL4 that has performed the verification of random numbers in step S808, and subsequent access to the URL5 and the URL6 are performed in the same session. In a case where the URL5 and the URL6 are directly accessed in a state in which no session ID is stored in the Cookie, the FIDO service 303 can return an error without performing requested processing.

In step S810, the web browser 314 accesses the address of the URL5. At this time, it is desirable to access the URL5 by automatically executing JavaScript without a web browser operation being performed by the user. By using an onload event of JavaScript called at a timing at which the web browser 314 completes the reading of the HTML of the HTML screen 1011, it is possible to automatically execute JavaScript.

Alternatively, a "passkey authentication" button, as illustrated in an HTML screen 1012, may be displayed, and JavaScript may be executed upon the detection of the user's press of the "passkey authentication" button, thereby allowing the access to the URL5.

In step S811, the FIDO service 303 that has received the access to the URL5 performs the generation of a challenge. The challenge correspond to random numbers.

Next, in step S812, the FIDO service 303 transmits input JSON data including the generated challenge, as a response. The input JSON data also includes information regarding a server of the MFP 101 (e.g., host name or domain name like "mfp101.office.local").

Next, in step S813, the web browser 314 executes the following JavaScript of WebAuthn using the received input JSON data, and activates the authenticator 312. In a case where the authenticator 312 manages a plurality of passkeys in association with the information regarding the server of the MFP 101, a screen for selecting one passkey from among the plurality of passkeys may be displayed in some cases.
<JavaScript of WebAuthn>
output JSON data = await navigator.credentials.create (input JSON data);

Next, in step S814, the authenticator 312 authenticates the owner of the mobile terminal 102 using any method of face authentication, fingerprint authentication, passcode authentication, and pattern authentication.

Next, in step S815, the authenticator 312 acquires a passkey (secret key of PKI) stored in association with the information regarding the server of the MFP 101 (e.g., mfp101.office.local). Then, the generation of a digital signature is performed using a secret key for the data including the challenge that has received in step S812. The authenticator 312 returns output JSON data to the web browser 314. The output JSON data includes the digital signature and a credential ID of the passkey used in generating the digital signature.

Next, in step S816, the web browser 314 accesses the URL6, and transmits the output JSON data including the public key, the credential ID and the digital signature to the FIDO service 303.

Next, in step S817, the FIDO service 303 refers to the user database in the HDD 204, and acquires a user ID and a public key of an account associated with the received credential ID.

Next, in step S818, using "the challenge issued by itself in step S811" and "the public key acquired from the user database in step S817", the FIDO service 303 verifies "the digital signature received in step S816". Specifically, by decoding the digital signature using the public key, the FIDO service 303 verifies whether the digital signature is identical to the challenge issued by itself. In a case where the digital signature is identical to the challenge, and the verification of the digital signature has succeeded, it is determined that authentication has succeeded. In a case where the verification has failed, it is determined that authentication has failed.

Next, in step S819, the FIDO service 303 transmits a response indicating whether authentication has succeeded.

In a case where authentication has succeeded, then in step S820, a request to log in to the operation panel 205 is transmitted to the login processing unit 302. The login request includes a user ID.

Next, in step S821, the login processing unit 302 performs login processing to allow the user with the user ID designated in step S820 to log in to the operation panel 205. Specifically, referring to the user database in the HDD 204, the login processing unit 302 acquires user information such as a user ID, a role, and an e-mail address of the account for which the login processing is being performed. Furthermore, the login processing unit 302 notifies the operation unit UI service 304 of a login occurrence event. The login occurrence event includes information regarding the user for which the login processing is being performed.

Lastly, in step S822, the login processing unit 302 closes the mobile authentication screen 501, the operation unit UI service 304 displays the menu screen 503, and the login processing ends. If the verification has succeeded in step S818, the operation unit UI service 304 provides the user with the functions that are premised on user authentication. The functions that are premised on user authentication, which are to be provided in a case where verification has succeeded, have been described above in the description of the user authentication function.

In step S817, in a case where verification has not succeeded, the FIDO service 303 transmits a failure notification in step S819. Examples of such a case include a case where "a designated user ID is not registered in the user database ", a case where "a public key of a passkey is not registered in association with a user ID", and a case where "the verification of the digital signature has failed" in step S818. Alternatively, the FIDO service 303 may notify the login processing unit 302 of an error, and an authentication failure message may be displayed on the mobile authentication screen 501. In a case where "a designated user ID is not registered in the user database", or in a case where "a public key of a passkey is not registered in association with a user ID", the FIDO service 303 cannot identify a public key to be used in the verification in step S818. Thus, a failure notification may be transmitted in step S819 without performing the verification in step S818.

In a case where an authentication success notification or an authentication failure notification is received, random numbers to be stored in the QR code on the mobile authentication screen 501 are desirably updated to new random numbers. For safety reasons, the lifetime of random numbers is desirably shortened by periodically updating the random numbers even in a case where an authentication success notification or an authentication failure notification is not received.

In the above-described configuration, an example in which, in step S809, the web browser 314 that has completed the reception of the HTML of the HTML screen 1011 automatically executes JavaScript using the onload event of JavaScript has been described. In step S809, the passkey authentication button may be included as in the HTML screen 1012, and the user may be prompted to press the passkey authentication button.

In step S809, a text field for entering a user ID may be included as illustrated in an HTML screen 1013, the user may be prompted to enter a user ID. In this case, the URL5 to be accessed in step S810 includes a user ID. The FIDO service 303 that has received this can acquire a credential ID associated with the user ID, from the user database, and include the credential ID in the response to be transmitted in step S812. With this configuration, it is possible to narrow down to one passkey to be used, based on the credential ID, even if a plurality of passkeys is managed on the authenticator 312 side.

### <Sequence of Passkey Registration and Authentication to Be Executed When Simple Login Is Enabled>

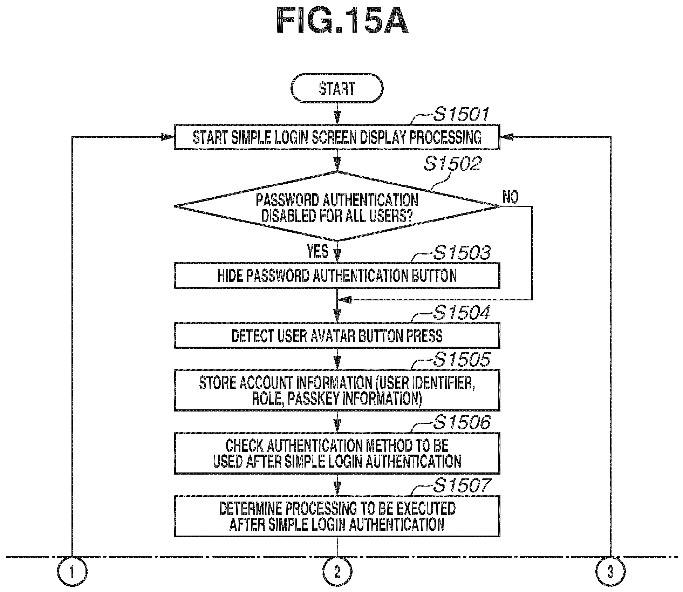

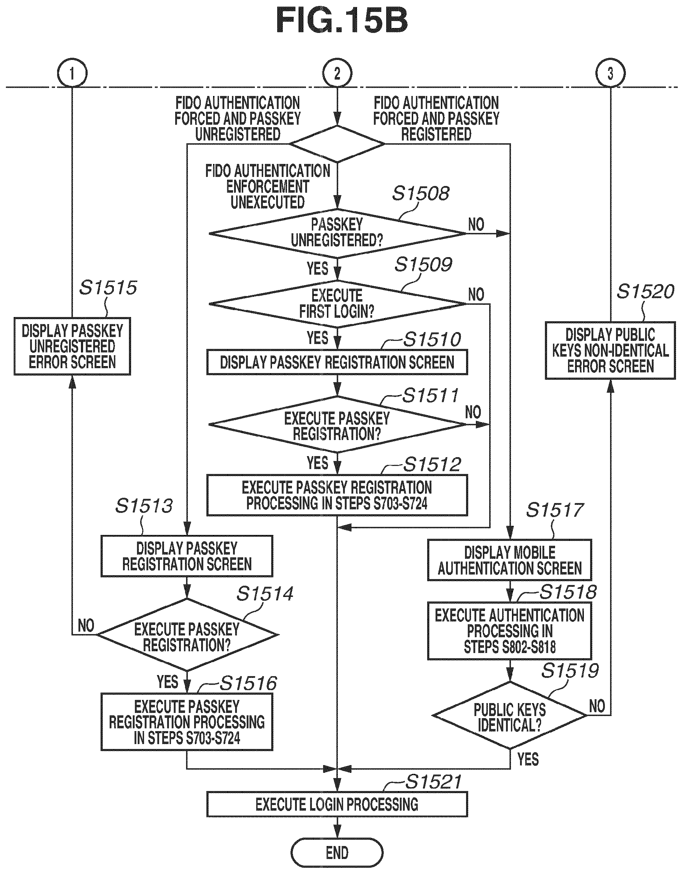

A flow of processing up to passkey registration and authentication to be executed when simple login is enabled will be described with reference to the flowchart in Figs. 15A and 15B. The processing in the flowchart in Figs. 15A and 15B is started in a case where a logged-in user executes logout, for example. Further, the processing is started if the power of the MFP 101 is turned on.

In step S1501, the login processing unit 302 checks whether the enabling button 1402 for "enabling simple login" has been set on the simple login setting screen 1401. In a case where simple login is enabled, the login processing unit 302 starts processing for displaying the simple login screen 1301.

In step S1502, the login processing unit 302 checks account information to be displayed on the simple login screen 1301, referring to the user database in the HDD 204. The login processing unit 302 checks whether password authentication is disabled for all users. If password authentication is disabled (YES in step 1502), the processing proceeds to step S1503. On the other hand, if password authentication is not disabled (NO in step S1502), the processing proceeds to step S1504. In step S1503, the password authentication button is hidden.

After executing the processing for displaying the simple login screen 1301, in step S 1504, the login processing unit 302 detects the press of a user avatar.

Next, in step S1505, account information, such as a user ID and a role associated with the user avatar, is temporarily stored. The method of temporarily storing the account information may be a method that uses an API, or a method of storing the account information into an area of the RAM 203. The storage method and the storage timing are not specifically limited.

Next, in step S1506, the login processing unit 302 checks the setting 1403 of authentication method enforcement for each role on the simple login setting screen 1401. As illustrated in Fig. 14, in a case where a role of a user that executes simple login is "Administrator" or "General User", a setting of enforcing FIDO authentication can be executed. In a case where a role of the user is "Limited User", a setting of not enforcing authentication processing after simple login can be executed. An administrator that executes a simple login setting may enforce FIDO authentication or may set authentication to be not executed after simple login, for all roles.

Next, in step S1507, the login processing unit 302 determines processing to be executed after simple login authentication, based on the temporarily-stored role information and the setting 1403 of authentication method enforcement for each role.

For example, in a case where the authentication of a user "Dave" illustrated in the user database 401 is to be performed, because the setting of FIDO authentication enforcement is set to the unforced state ("FIDO AUTHENTICATION ENFORCEMENT UNEXECUTED"), the processing proceeds to step S1508. In step S1508, the login processing unit 302 checks a passkey registration state of the user "Dave" to be authenticated. Because the passkey registration state of the user "Dave" to be authenticated is an unregistered state (YES in step S1508), the processing proceeds to step S1509. In step S1509, the login processing unit 302 checks whether the user "Dave" to be authenticated is a user who executes their first login. In a case where the user is not a user who executes their first login (NO in step S1509), the login processing unit 302 executes only simple login authentication, and the processing proceeds to step S1521. In step S1521, the login processing ends. In a case where the user is a user who executes their first login (YES in step S1509), then in step S1510, the login processing unit 302 executes processing of displaying the registration screen 1306 for promoting the user to execute passkey registration before authentication processing execution. In step S1511, it is determined whether the login user executes passkey registration. In a case where it is determined that the login user executes passkey registration (YES in step S1511), the processing proceeds to step S1512. In step S1512, the login processing unit 302 executes the above-described passkey registration processing in steps S703 to S724. Then, in step S1521, the login processing unit 302 executes login processing. In a case where the login user does not execute passkey registration (NO in step S1511), the processing proceeds to step S1521. In step S1521, the login processing unit 302 executes only simple login authentication, and the login processing ends.

In a case where the authentication of a user "Carol" illustrated in the user database 401 is to be performed, the setting of FIDO authentication enforcement is set to a forced state, but passkey registration has not been executed ("FIDO AUTHENTICATION FORCED AND PASSKEY UNREGISTERED"). Thus, in step S1513, the login processing unit 302 executes processing for displaying the passkey registration screen 1305 before executing authentication processing. Next, in step S1514, in a case where it is determined that the login user executes passkey registration (YES in step S1514), the processing proceeds to step S1516. In step S1516, the login processing unit 302 executes the above-described passkey registration processing in steps S703 to S724. After executing the passkey registration processing, the login processing unit 302 executes the login processing illustrated in in step S1521, and the processing ends. In a case where the login user does not execute passkey registration (NO in step S1514), the processing proceeds to step S1515. In step S1515, the login processing unit 302 cancels the simple login authentication processing and executes processing for displaying a passkey unregistered error screen.

In a case where the authentication of a user "Alice" illustrated in the user database 401 is to be performed, because the setting of FIDO authentication enforcement is set to the forced state and passkey registration has been executed ("FIDO AUTHENTICATION FORCED AND PASSKEY REGISTERED"), the processing proceeds to step S1517. In step S1517, the login processing unit 302 executes the processing the mobile authentication screen 1302. After the display processing for displaying the mobile authentication screen 1302 is executed, in step S1518, the login processing unit 302 executes the above-described passkey authentication processing in steps S802 to step S818.

Here, in step S818 of Fig. 15B, the FIDO service 303 performs the verification of the digital signature using a public key corresponding to the user on which simple login authentication has been executed. In step S817, in a case where "a public key of a passkey is not registered in association with a user ID", or "a public key is registered but a user ID is different from a user ID of the user on which simple login authentication has been executed" (NO in step S1519), in step S1520, a failure notification is transmitted without performing the verification in step S818. In a case where the verification has not succeeded in step S818 due to a reason that, for example, "the verification of the digital signature has failed" (NO in step S1519), in step S1520, a failure notification is transmitted. The login processing unit 302 may also make a notification of an error, and an authentication failure message may be displayed on the mobile authentication screen 501. In a case where authentication has failed (NO in step S1519), the login processing unit 302 cancels the simple login authentication processing, and in step S1520, executes processing for displaying a public key non-identical error screen. In a case where verification has succeeded (YES in step S1519), the login processing unit 302 executes the login processing illustrated in step S1521, and the processing ends.

### <Effect>

Since the present embodiment allows a user to log in to an operation panel using a biometric authentication function of a mobile terminal owned by the user, it is possible to provide password-less login without additional cost of an IC card reading device. It is also safe because a digital signature verification technique that uses a passkey, which is used also in the FIDO, is used. In the present embodiment, it is possible to perform the verification of an image forming apparatus without requiring an external FIDO server.

According to the present embodiment, a method of disabling password authentication for a user who has registered a passkey is provided. By disabling password authentication, it is possible to remove security-related concerns such as a password brute force attack and password leakage, whereby a safe login method can be provided.

According to the present embodiment, furthermore, a mobile terminal has a function of reading a QR code using a camera of the mobile terminal, activating a standard browser, and accessing an URL embedded in the QR code. Thus, a dedicated mobile application is unnecessary, and this function can be used only by a standard camera and a standard browser provided in the mobile terminal.

In the first embodiment, an example of using a standard camera and a standard browser provided in a mobile terminal has been described.

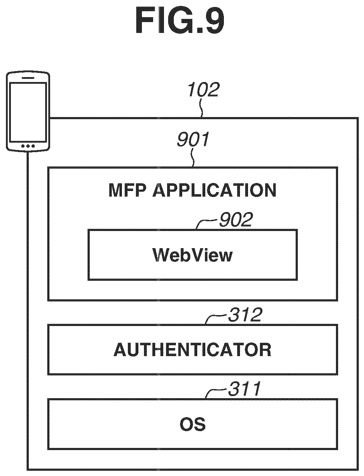

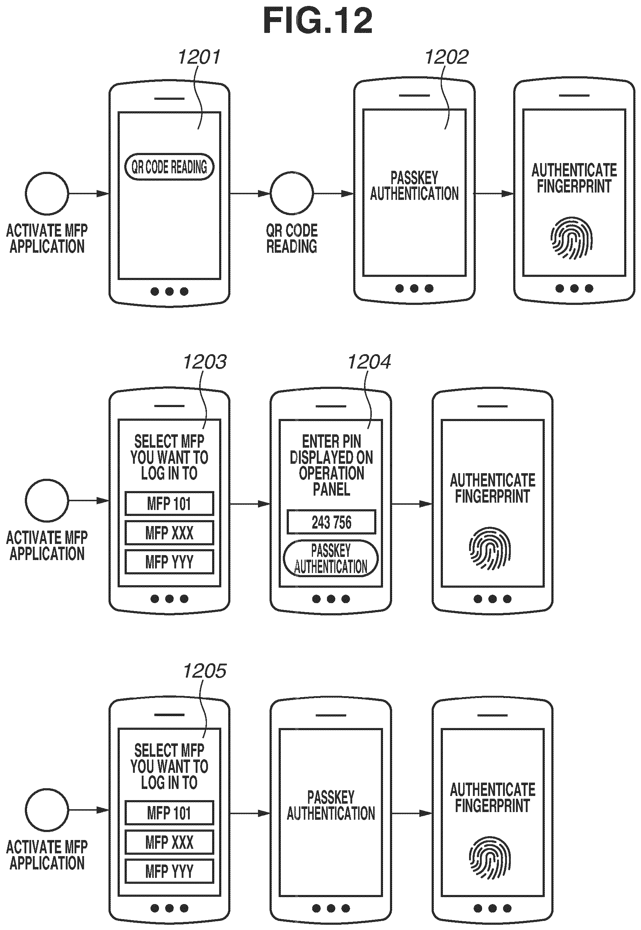

As a second embodiment, as illustrated in Fig. 9, a vendor may provide an MFP application 901 installable on the mobile terminal 102. Fig. 12 illustrates an operation screen of the mobile terminal 102 that is to be displayed in a case where the MFP application 901 is used.

The MFP application 901 includes a WebView 902. The WebView 902 is a component having a function equivalent to a web browser. The MFP application 901 can also store in advance an address of the MFP 101 and a user ID in a storage area of the MFP application 901.

The MFP application 901 activates a camera and displays a QR code reading button on a screen 1201. The MFP application 901 detects the press of the QR code reading button, and then reads a QR code. Next, if the MFP application 901 acquires an address from the QR code, the MFP application 901 activates the WebView 902 (screen 1202). The WebView 902 accesses the address acquired from the QR code. At this time, a user ID preregistered in the MFP application 901 is transmitted. The WebView 902 plays the role of the web browser 314 in the flow of processing from steps S806 to S819 in the first embodiment. Lastly, it is desirable that the MFP application 901 detects the reception of the response in step S819 and closes the WebView 902.

Alternatively, the user may be prompted to select an MFP from among MFPs on a screen 1203 of the MFP application 901, and a URL of an address stored in association with the selected MFP may be accessed from the WebView 902.

A configuration of confirming that the user is present in front of the MFP 101, using a personal identification number (PIN) code may be employed. The PIN code corresponds to random numbers. In this case, in step S804, a random PIN code is displayed on the mobile authentication screen 501. It is desirable that, in step S809, an HTML screen 1204 including a text field for PIN code entry is returned, and the user is asked to enter a PIN code that the user has visually checked on the mobile authentication screen 501, on the HTML screen 1202.

Alternatively, the user may be prompted to select an MFP from among MFPs on a screen 1205 of the MFP application 901, and passkey authentication may be executed without requiring QR code reading and PIN code entry. In this case, because whether a user who performs a mobile operation is present in front of the MFP 101 cannot be confirmed, the user is permitted to log in to the operation panel 205 of the MFP 101 from a remote location.

In the first embodiment, a configuration in which an image forming apparatus has a digital signature verification technique (FIDO service) therein has been described. In this case, in a case where there is a plurality of image forming apparatuses in an office and a user uses the plurality of image forming apparatuses, a public key (passkey) is to be registered with each image forming apparatus. To solve this issue, in a third embodiment, a configuration of providing the digital signature verification technique (FIDO service) on the outside of image forming apparatus will be described. In the third embodiment, a user who uses an image forming apparatus is authenticated using the digital signature verification technique (FIDO service) provided on the outside of the image forming apparatus, in order to allow the user to use the image forming apparatus.

### <System Configuration>

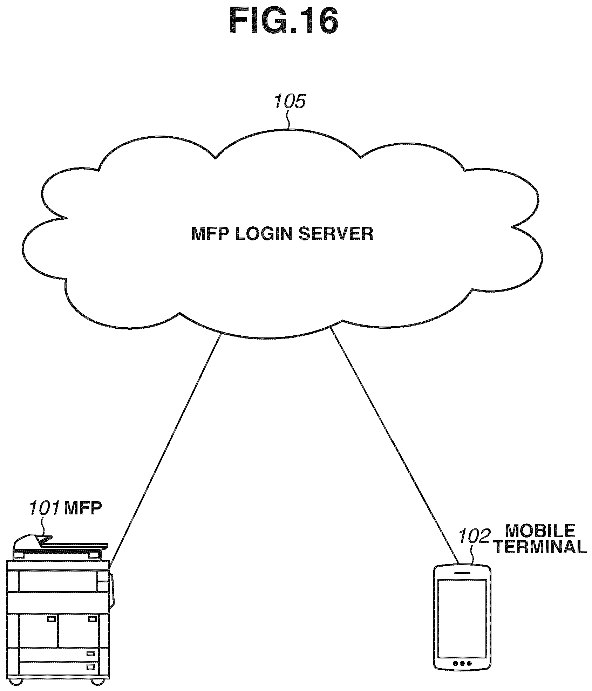

A system configuration according to the present embodiment will be described with reference to Fig. 16. The MFP 101 is an MFP to which the present invention is applied. The mobile terminal 102 is a user terminal owned by the user of the MFP 101, and is a mobile terminal such as a smartphone.

An MFP login server 105 is a cloud service having a server function accessible from the internet. The MFP login server 105 may be an on-premises server connected to a LAN, instead of a cloud service. The function of the MFP login server 105 may be implemented by a plurality of servers instead of a single server. The present invention is not limited to a cloud service, but the present embodiment will be described assuming that the MFP login server 105 is a cloud service.

The MFP 101 and the mobile terminal 102 can each communicate with the MFP login server 105 via the internet. The MFP 101 installed in an office can connect with the MFP login server 105 via a LAN or a proxy server constructed in the office. Alternatively, the MFP 101 may directly connect to the internet and connect with the MFP login server 105. The mobile terminal 102 used in an office may connect with the MFP login server 105 via a wireless LAN in the office. Alternatively, the mobile terminal 102 may directly connect to a mobile network, such as the 4th generation (4G) or the 5th generation (5G), and connect with the MFP login server 105. It is assumed that a plurality of MFPs (not illustrated) and a plurality of mobile terminals (not illustrated) of the user that are connected with the MFP login server 105 exist.

The hardware configuration of the MFP 101 is similar to the configuration according to the first embodiment that is illustrated in Fig. 2A. The hardware configuration of the mobile terminal 102 is similar to the configuration according to the first embodiment that is illustrated in Fig. 2B.

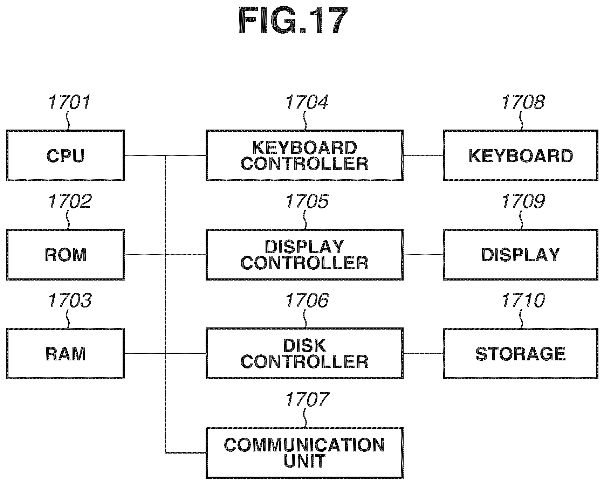

Fig. 17 is a schematic diagram illustrating a hardware configuration of a general-purpose computer for implementing the MFP login server 105.

A CPU 1701 executes programs stored in a ROM 1702, and programs of an OS and an application that are loaded onto a RAM 1703 from a storage 1710. That is, by executing a program stored in a readable storage medium, the CPU 1701 functions as each processing unit that executes processing of each sequence to be described below. The RAM 1703 is a main memory of the CPU 1701, and functions as a work area. A keyboard controller 1704 controls operation input from a keyboard 1708 or a pointing device (not illustrated) (mouse, touch pad, touch panel, trackball, etc.). A display controller 1705 controls the display on a display 1709. A disk controller 1706 controls data access to a hard disk drive (HDD) storing various types of data and the storage 1710, such as a flash memory. A communication unit 1707 is a network interface that is connected to a network and executes control processing of communication with another device connected to the network. In a case where a server is constructed as a virtual server, because an operation is performed from a remote location, the keyboard 1708 and the display 1709 need not be always provided. In addition, a storage connectable to a network that can communicate with the communication unit 1707 may be used in place of the storage 1710.

### <Software Configuration>

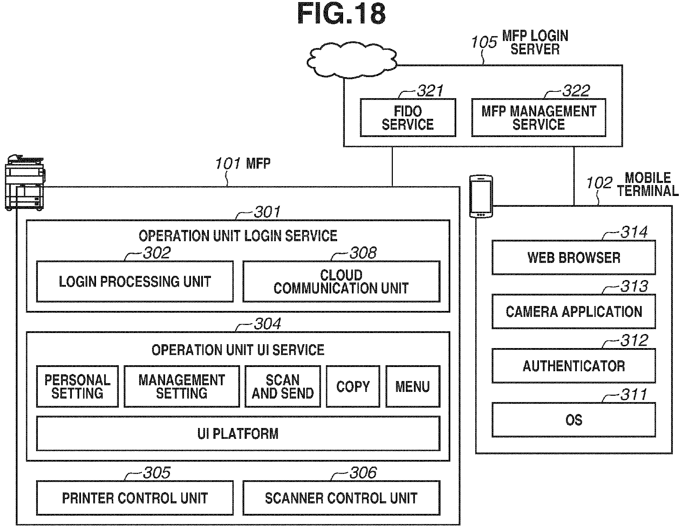

Fig. 18 is a schematic diagram illustrating software configurations of the MFP 101, the mobile terminal 102, and the MFP login server 105. The software modules equivalent to the software modules according to the first embodiment that are illustrated in Figs. 2A and 2B are assigned the same reference numerals, and the description thereof will be omitted.

The operation unit login service 301 includes a cloud communication unit 308 for communicating with an external FIDO service 321, in place of the FIDO service 303 illustrated in Fig. 2. The operation unit login service 301 may include both of the FIDO service 303 and the cloud communication unit 308. To receive a message from the MFP login server 105, the cloud communication unit 308 establishes WebSocket connection with the MFP login server 105. The present invention is not limited to the use of the WebSocket, and a different technique may be used as long as a message can be transmitted from the MFP login server 105 to the MFP 101. For example, a different technique, such as Message Queue Telemetry Transport (MQTT), polling, or WebPush, may be used.

The FIDO service 321 of the MFP login server 105 has a web server function that enables communication in compliance with the HTTP. The FIDO service 321 also has an authentication function of WebAuthn defined by the FIDO Alliance or the W3C. The FIDO service 321 also has a function as an Identify Provider (IdP) that manages an account of a user who uses an operation panel (operation unit) of the MFP 101. The FIDO service 321 includes, as an IdP, a website and a database for registering and managing account information on the user. A configuration of managing a user account in cooperation with an IdP provided by a third vendor, such as the Microsoft Corporation or the Google LLC, may be employed. An MFP management service 322 includes a website and a database for registering and managing an MFP connecting to the MFP login server 105.

The MFP login server 105 may have a function of managing an MFP in each office and a user account for each tenant that is based on a contract with a corporation office. In this case, only users to which authority is given for each tenant can manage an MFP and an MFP user account on a website of the MFP login server 105.

Further, the MFP login server 105 may manage an MFP installed in a public space, such as a convenience store, and an account of an individual user who uses the MFP. In this case, an administrator of the MFP registers information regarding the MFP with the MFP management service 322. The individual user registers their own account in the FIDO service 321 based on a contract. It is considered that an MFP and a function of the MFP that can be used by the individual user are determined based on the contract.

### <User Account>

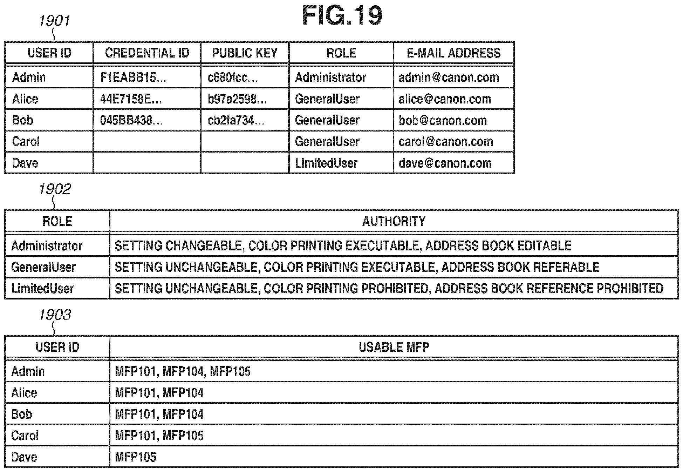

Fig. 19 is a schematic diagram illustrating account information managed by the FIDO service 321. In account information 1901, a user ID, passkey information to be used in FIDO authentication (credential ID and public key), a role, and an e-mail address are recorded.

A "user ID" is an identifier for identifying a user. A "role" is information indicating a use authority of a user over the MFP 101. An example of each role and a use authority is shown in a role information table 1902. In addition to the definition of default roles, the user may be enabled to create a new role by setting detailed use authority.

A table 1903 indicates association between a user and an MFP that can be used by the user.

### <MFP Management Information>

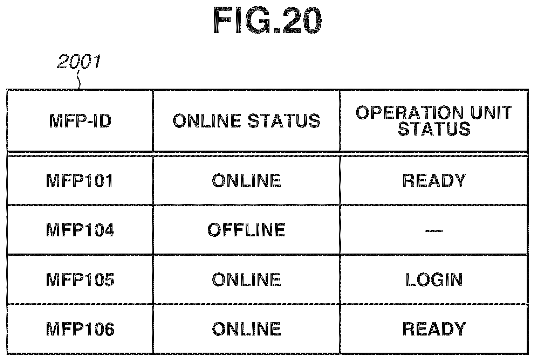

Fig. 20 is a schematic diagram illustrating MFP management information 2001 managed by the MFP management service 322. An "MFP-ID" is an identifier for uniquely identifying an MFP. That is, the "MFP-ID" is identification information on an MFP. The "MFP-ID" may be any information as long as an "MFP-ID" of a certain MFP does not overlap an ID of another MFP. For example, a serial number of an MFP, or a host name in a Fully Qualified Domain Name (FQDN) format can be used. In the case of communicating with an MFP using the MQTT, a client ID used in the MQTT communication may be used as an MFP-ID. In addition, the MFP management service 322 may issue an MFP-ID at the time of MFP registration and the MFP-ID may be registered with the MFP. An "online status" indicates a state of connection with each MFP. For example, in a case where WebSocket connection is established between an MFP and the MFP login server 105, "online" is indicated, and in a case where a connection is not established, "offline" is indicated.

An "operation unit status" indicates a usage status of an operation panel of an MFP. In a case where nobody is in a login state, "ready" is indicated. In a case where someone is in a login state and using the operation panel, "login" is indicated.

### <Login Setting of MFP>

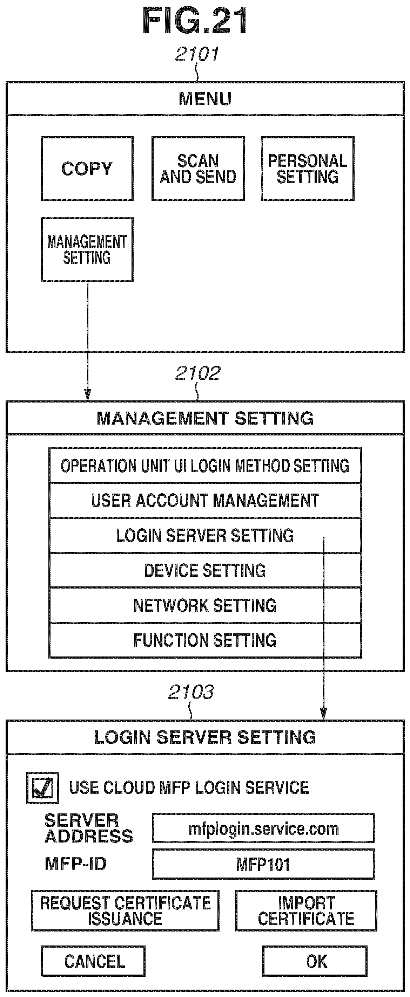

Next, a cooperative operation to be executed by the MFP 101 and the MFP login server 105 will be described with reference to Figs. 21, 22, and 23.

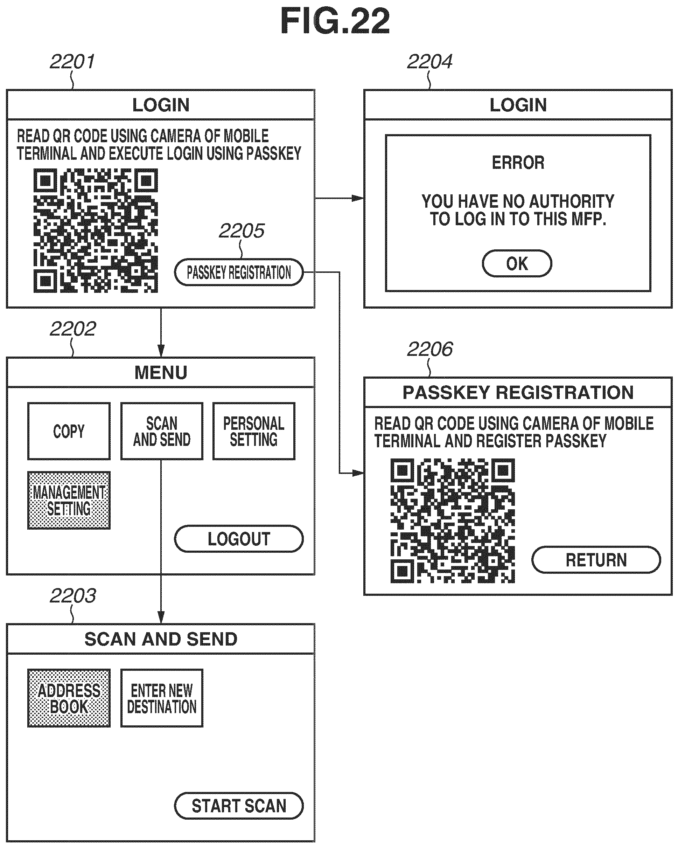

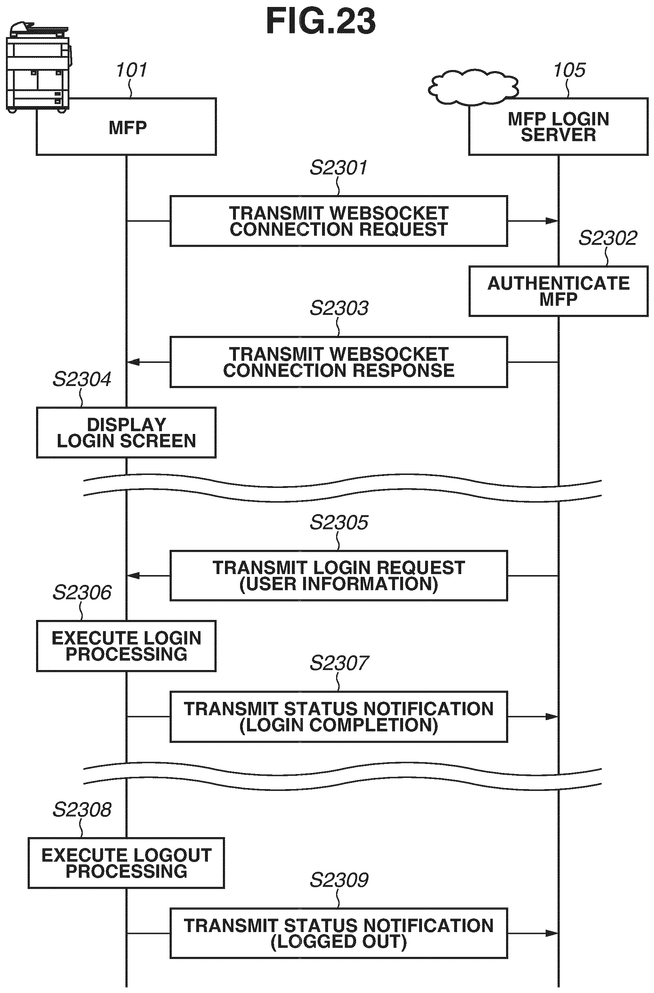

Figs. 21 and 22 are schematic diagrams illustrating an example of a user interface to be displayed on the operation panel 205 of the MFP 101. Fig. 23 is a schematic diagram illustrating communication between the MFP 101 and the MFP login server 105.

A menu screen 2101 is displayed on the operation panel 205 before a login setting is executed.

If the press of a management setting button on the menu screen 2101 is detected, a management setting screen 2102 is displayed on the operation panel 205. An authentication screen (not illustrated) for entering a user name and a password may be displayed when the management setting button is pressed in order to authenticate an administrator. The management setting screen 2102 is a portal screen in the management setting. The administrator of the MFP 101 can execute various settings related to the MFP 101, such as a "network setting", a "function setting", and a "login server setting". If a "login server setting" button is pressed on the management setting screen 2102, a login server setting screen 2103 is displayed. The login server setting screen 2103 is a setting screen for enabling the login function of the MFP 101. For example, the administrator of the MFP 101 enables a function of cooperating with an MFP login server by entering "a server address of an MFP login server" and "an MFP-ID" on the login server setting screen 2103. Furthermore, because a client certificate for identifying an MFP is handled on the login server setting screen 2103, the following functions are provided.
- The generation of a key pair
- The creation of an issuance request (Certificate Signing Request) of a client certificate (public key certificate). The client certificate includes an MFP-ID.
- Importing a client certificate issued by a Certificate Authority (CA) from an external memory medium.

### <Connection between MFP and MFP Login Server>

The MFP 101 in which the function of cooperating with an MFP login server is enabled tries to connect with the MFP login server 105 using a protocol of the Web Socket.

Specifically, in step S2301 illustrated in Fig. 23, the cloud communication unit 308 of the MFP 101 transmits a WebSocket connection request to the MFP login server 105. At this time, the MFP 101 performs Transport Layer Security (TLS) handshake and transmits a client certificate and a digital signature to the MFP login server 105.

In step S2302, to prevent impersonation of an MFP, the MFP login server 105 authenticates the MFP by verifying the received client certificate and digital signature. To confirm that the MFP is an MFP managed in the table 1903 of MFP management information, it is confirmed whether an MFP-ID acquired from the client certificate is registered in MFP management information 2001.

In a case where the authentication of the device has succeeded, then in step S2303, the MFP login server 105 returns a WebSocket connection response to the MFP 101. Thereafter, the MFP 101 and the MFP login server 105 become able to transmit a message to each other using WebSocket connection. The MFP login server 105 that has detected that connection with the MFP 101 has been established changes the "online status" in the MFP management information 2001 from "offline" to "online". In a case where the authentication of the device has failed, the MFP login server 105 can refuse the WebSocket connection request from the MFP 101.

In step S2304, the MFP 101 that has received the WebSocket connection response displays a login screen 2201 illustrated in Fig. 22 on the operation panel 205, and restricts the use of the operation panel 205 in such a manner that the menu screen and various functions cannot be used unless login is executed.

### <Login Instruction from MFP Login Server>

The login of the user is cooperatively performed by the operation unit login service 301, the mobile terminal 102, and the MFP login server 105. The MFP login server 105 authenticates the user by a technique that uses a PKI called a passkey that is defined by the FIDO. The registration of a passkey and an authentication sequence that uses a passkey will be described below in detail. In the present embodiment, authentication of a user that is performed by the MFP login server 105 by using the technique that uses a PKI defined by the FIDO will be referred to as user authentication. That is, authenticating a user based on a result obtained by verifying, using a public key, signature data obtained by encrypting a challenge using a secret key will be referred to as user authentication. In the present embodiment, aside from the user authentication, authentication for authenticating the owner of a mobile terminal is performed in the mobile terminal. The authentication corresponds to authentication in step S2619 and authentication in step S2714 to be described below. In this manner, in the present embodiment, a plurality of types of authentication exist.

In a case where user authentication in the MFP login server 105 has succeeded, in step S2305, the MFP login server 105 transmits user information on the target account for which the login to the MFP 101 is to be performed. The user information includes information such as a user ID, an e-mail address, a role, and authority stored in the account information 1901. The user information can be transmitted and received in a text format, such as JSON.

In step S2306, the cloud communication unit 308 of the MFP 101 transmits the received user information to the login processing unit 302, and the login processing unit 302 performs login processing.

After the login processing completion, in step S2307, the cloud communication unit 308 of the MFP 101 transmits a login completion notification to the MFP login server 105. The MFP login server 105 changes the operation unit status in the MFP management information 2001 from "ready" to "login".

If login has succeeded, the operation unit UI service 304 that has detected the login of the user displays a menu screen 2202 on the operation panel 205. Then, the operation unit UI service 304 provides functions that are premised on user authentication. Control is performed in such a manner that a function on which authority is not given to the user cannot be used, by displaying the button of the function in a grayout state.

Examples of the functions that are premised on user authentication include a print function to be executed by the printer 206 with a predetermined print setting. In a case where a user assigned with a role of an Administrator or a General User is authenticated, printing with a color print setting becomes executable. In a case where a user assigned with a role of a Limited User is authenticated, only printing with a monochrome print setting is permitted. For example, in a case where a user assigned with a role of a General User has logged in to the MFP 101, a "management setting" button on the menu screen 2202 is displayed in a grayout state. In a case where a user who has no authority to use an address book has logged in to the MFP 101, an address book reference button on a scan and send screen 2203 is displayed in a grayout state.

Examples of the functions that are premised on user authentication also include a function of transmitting, to an external apparatus, image data obtained by scanning executed by the scanner 207. In a case where a user assigned with a role of an Administrator or a General User is authenticated, the function is provided to the user.

Examples of the functions that are premised on user authentication further include a function of using an address book when designating a transmission destination of image data obtained by scanning executed by the scanner 207. The address book is a list in which information regarding one or a plurality of transmission destinations is registered. A user assigned with a role of a General User can designate a transmission destination of image data by selecting the transmission destination from the address book. A user assigned with a role of an Administrator can register a new transmission destination on the address book or edit the address book in addition to selecting a transmission destination from the address book.

Examples of the functions that are premised on user authentication also include a function of performing settings of the MFP 101. As displayed on the management setting screen 504, the settings of the MFP 101 include an operation unit UI login method setting, a setting related to each user account, a device setting, and a network setting. In a case where a user assigned with a role of an Administrator is authenticated, these setting functions are provided to the user and the user can make any of the settings of the MFP 101. The device setting includes a setting related to a print job or a scan job, such as a setting indicating whether to display, on the operation panel 205, a history to be recorded in job execution. The network setting includes a setting, such as a setting indicating whether to permit the use of each printing protocol in printing.

In a case where it is detected that the user has performed a logout operation on the operation panel 205, in step S2308, the login processing unit 302 of the MFP 101 performs the logout processing and displays the login screen 2201, again.

After the logout processing, in step S2309, the cloud communication unit 308 of the MFP 101 transmits a logout notification to the MFP login server 105. The MFP login server 105 changes the operation unit status in the MFP management information 2001 from "login" to "ready".

### <FIDO Service Function>

The FIDO service 321 has a web server function that enables communication in compliance with the HTTP. The FIDO service 303 also has an authentication function of WebAuthn defined by the FIDO Alliance or the W3C.

The FIDO service 321 is accessed via HTTPS communication by the web browser 314 of the mobile terminal 102 that has read a QR code displayed on the login screen 2201 or a passkey registration screen 2206. The FIDO service 321 provides, as a web server, access to the following URL1 to URL6 and functions, for example.
<URL1>
https://mfplogin.service.com/registration

The URL1 returns an HTML for an HTML screen for acquiring a user ID, an HTML for performing identification of a user using a passcode, or an HTML for passkey registration.

The HTML for passkey registration that is returned by the URL1 encompasses JavaScript for accessing a REST API of the following URL2 and URL3. The HTML also encompasses the following JavaScript of WebAuthn defined by the FIDO2.0.
<JavaScript of WebAuthn>
output JSON data = await navigator.credentials.create (input JSON data);
<URL2>
https://mfplogin.service.com/registration/challenge

The URL2 is a URL of a REST API that returns input JSON data to be input to the above-described API "navigator.credentials.create()". The input JSON data includes challenge data issued by the FIDO service 321. The challenge corresponds to random numbers, and is verification data to be used in verification for passkey registration.
<URL3>
https://mfplogin.service.com/registration/verification

The URL3 is a URL of a REST API that receives information for passkey registration. Output JSON data output by the above-described API "navigator.credentials.create()" is received. The output JSON data includes a credential ID, a challenge, a public key, and a digital signature issued by the mobile terminal 102.
<URL4>
https://mfplogin.service.com/authentication?random=random numbers&MFP-ID=the MFP 101

The URL4 is a URL that returns an HTML for passkey authentication. The URL4 can designate random numbers and an MFP-ID as URL parameters. The random numbers correspond to a character string, such as "b15dee080a1a549be6e3c74e6b59f5c5", for example. The random numbers are identical to a character string to be embedded into a QR code on the login screen 2201. The MFP-ID indicates an MFP to which the user is to log in, in a case where passkey authentication has succeeded.

The HTML for passkey authentication that is returned by the URL4 encompasses JavaScript for accessing a REST API of the following URL5 and URL6. The HTML also encompasses the following JavaScript of WebAuthn defined by the FIDO2.0.
<JavaScript of WebAuthn>
output JSON data = await navigator.credentials.get (input JSON data);
<URL5>
https://mfplogin.service.com/authentication/challenge

The URL5 is a URL of a REST API that returns the above-described input JSON data to be input to "navigator.credentials.get()" described above. The input JSON data includes challenge data issued by the FIDO service 321. The challenge corresponds to random numbers, and is verification data to be used in verification for user authentication that uses a passkey.
<URL6>
https://mfplogin.service.com/authentication/verification

The URL6 is a URL of a REST API that receives information for passkey authentication. Output JSON data output by the above-described API "navigator.credentials.get()" is received. The output JSON data includes a credential ID of a passkey used in generating a digital signature, a challenge, and a digital signature.

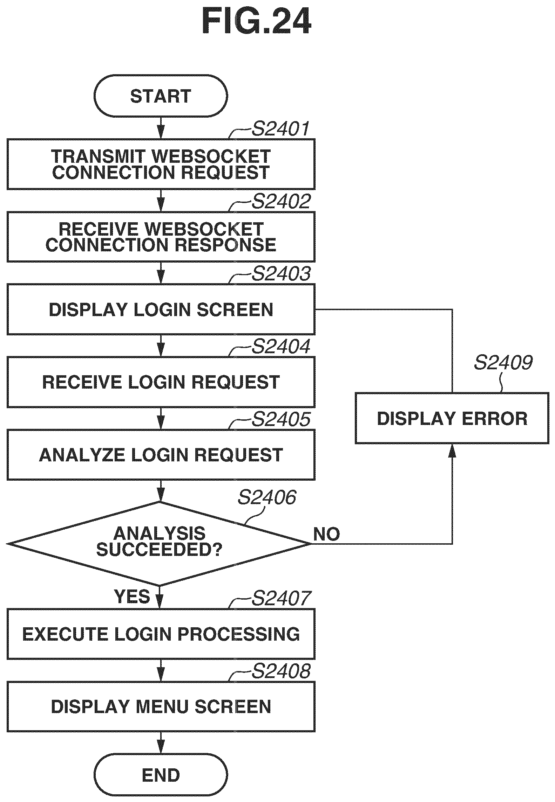

Fig. 24 is a flowchart illustrating a flow of processing to be executed by the CPU 201 of the MFP 101 in the above-described cooperative between the MFP 101 and the MFP login server 105.

An operation to be executed by the CPU 201 of the MFP 101 will be described with reference to Fig. 24.

In step S2401, in a case where the function of cooperating with the MFP login server 105 is enabled, the CPU 201 transmits a Web Socket connection request to the MFP login server 105.

In step S2402, the CPU 201 receives a WebSocket connection response from the MFP login server 105, and establishes WebSocket connection with the MFP login server 105.

In step S2403, the CPU 201 displays a login screen, and waits for a login request to be transmitted from the MFP login server 105.

In step S2404, the CPU 201 receives a login request transmitted from the MFP login server 105.

In step S2405, the CPU 201 analyzes the received data.

In step S2406, in a case where the analysis of the received data has succeeded, and user information (information such as user ID, e-mail address, role, authority) has been acquired, the CPU 201 determines that the analysis has succeeded. In a case where the analysis of the received data has failed, and the user information has failed to be acquired, the CPU 201 determines that the analysis has failed.

In a case where the analysis has succeeded (YES in step S2406), the processing proceeds to step S2407. In step S2407, the CPU 201 performs login processing to allow the user corresponding to the acquired user information to log in to the MFP 101.

In step S2408, the CPU 201 causes a screen to transition from the login screen to the menu screen, and the processing related to login ends.

In a case where it is determined in step S2406 that the analysis has failed (NO in step S2406), the processing proceeds to step S2409. In step S2409, the CPU 201 displays an error has occurred on the UI, the processing returns to step S2403, and the CPU 201 displays the login screen, again.

### <Passkey Registration Sequence>

A flow of processing related to passkey registration will be described with reference to Figs. 22, 25, 26A and 26B.

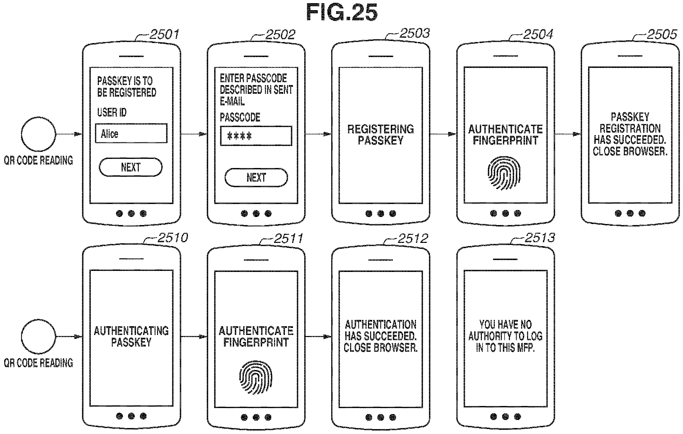

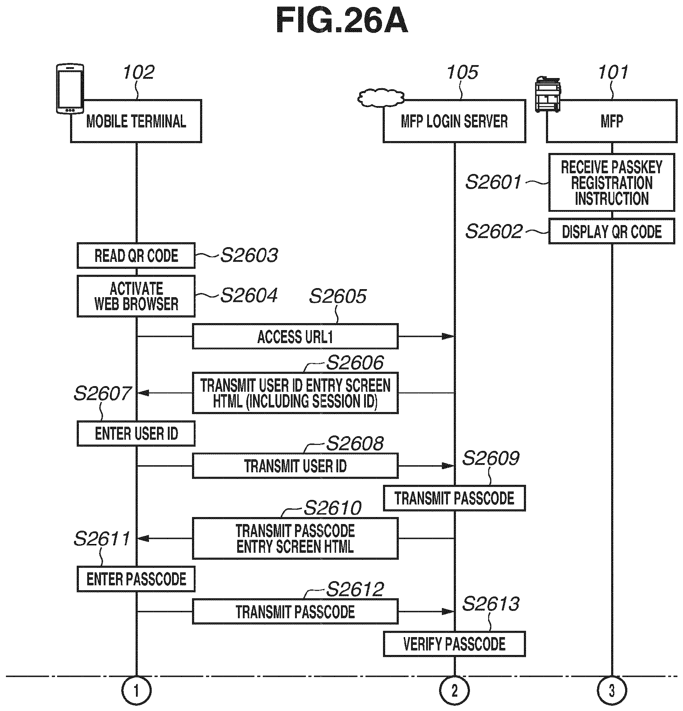

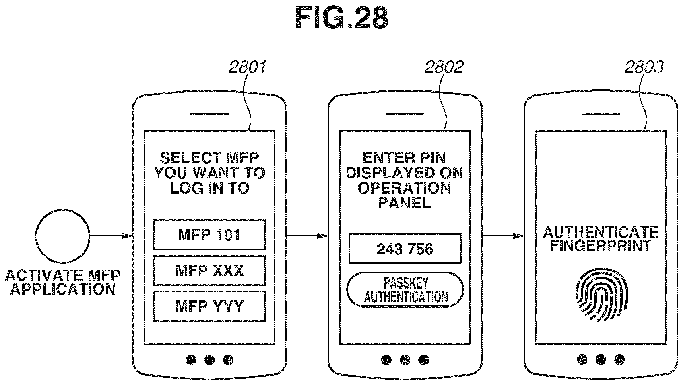

Fig. 25 is a diagram illustrating an example of an operation screen and an operation flow of the mobile terminal 102. Figs. 26A and 28B are sequence diagrams illustrating a flow of processing related to passkey registration.

In the present embodiment, processing to be executed by the MFP 101 is recorded on a software program, of the operation unit login service 301 or the FIDO service 321. The software program is stored in a nonvolatile storage, such as the ROM 202 or the HDD 204, and loaded onto the RAM 203, and the processing is accordingly executed by the CPU 201.

The processing to be executed by the mobile terminal 102 is recorded on a software program of the web browser 314 or the authenticator 312. The software program is stored in a nonvolatile storage, such as the ROM 212 or the flash storage 214, and loaded onto the RAM 213, and the processing is accordingly executed by the CPU 211.

The processing to be executed by the MFP login server 105 is recorded on a software program of the FIDO service 321 or the MFP management service 322. The software program is stored in a nonvolatile storage, such as the ROM 1702 or the storage 1710, and loaded onto the RAM 1703, and the processing is accordingly executed by the CPU 1701.

In step S2601, the operation unit login service 301 detects that the user has pressed a passkey registration button 2205 on the login screen 2201.

In step S2602, the operation unit login service 301 displays a QR code on the passkey registration screen 2206. Information regarding the URL1 is embedded in the QR code.

Next, in step S2603, the user activates the camera application 313 from the mobile terminal 102 owned by the user themselves, and reads the QR code displayed on the operation panel 205.

Next, in step S2604, the camera application 313 that has read out the URL1 from the QR code activates the web browser 314.

In step S2605, the web browser 314 accesses the address of the URL1.

In step S2606, the FIDO service 321 of the MFP login server 105 returns the HTML of a screen 2501 for entering a user ID. A header of a communication packet in step S2606 includes a session ID to be stored into a Cookie of the web browser 314. The session ID is used to confirm that the subsequent communication is performed in the same session. In a case where the subsequent communication is performed in a state in which no session ID is stored in the Cookie, it can be determined to be an unauthorized access made not through a required procedure, and an error can be transmitted as a response.

In step S2607, the web browser 314 displays the screen 2501 and prompts the user to enter a user ID. The user enters a user ID and presses a "next" button.

If the web browser 314 detects the entry of the user ID, then in step S2608, the web browser 314 transmits the user ID to the FIDO service 321.

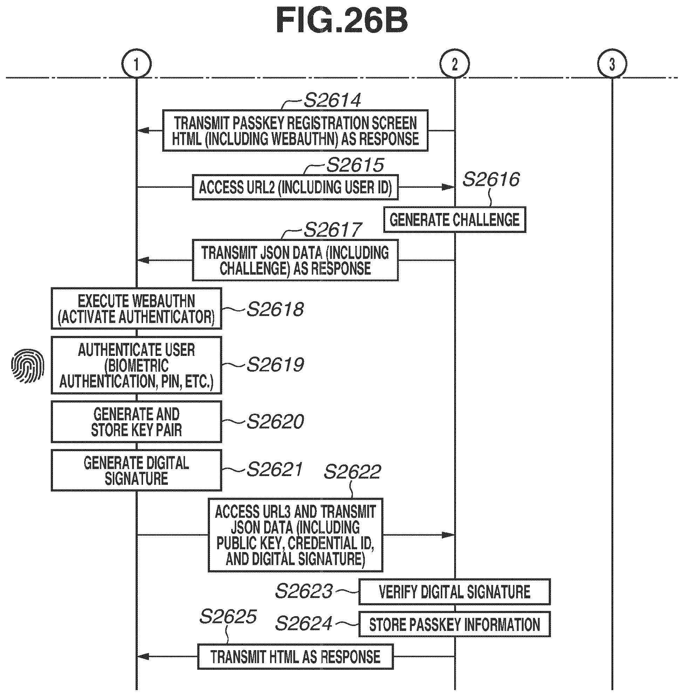

In step S2609, the FIDO service 321 checks whether the acquired user ID is registered in the account information 1901. In a case where the user ID is registered, the FIDO service 321 issues a passcode for identification of the user, and transmits the passcode to an e-mail address stored in association with the acquired user ID. The FIDO service 321 may prompt the user to pre-register a telephone number of the mobile terminal 102 and transmit the passcode in a short message instead of an e-mail. In a case where the user ID is not registered in the account information 1901, the FIDO service 321 transmits an error as a response, which is not illustrated in Figs. 26A and 26B. The FIDO service 321 may return a message for prompting the user to newly register an account.

In step S2610, the FIDO service 321 that has checked the registration of the account information returns an HTML of a screen 2502 for entering a passcode.

In step S2611, the web browser 314 displays the screen 2502 and prompts the user to enter a passcode. The user enters the passcode acquired via an e-mail or a short message and presses a "next" button.

If the web browser 314 detects the entry of the passcode, then in step S2612, the web browser 314 transmits the passcode to the FIDO service 321.

In step S2613, the FIDO service 321 checks whether the received passcode is identical to the passcode issued by itself. If the passcodes are identical, it can be determined that the owner of the mobile terminal 102 and the owner of the e-mail address or the telephone number registered in the account information 1901 are the same person. Thus, impersonation by another person can be prevented. In a case where the passcodes are not identical, the FIDO service 321 transmits an error as a response, which is not illustrated in Figs. 26A and 26B.

In step S2614, the FIDO service 321 that has confirmed that the passcodes are identical transmits an HTML of a passkey registration screen 2503 as a response. The HTML of the screen 2503 encompasses JavaScript for accessing a REST API of the URL2 and the URL3. The HTML also encompasses the following JavaScript of WebAuthn defined by the FIDO2.0.
<JavaScript of WebAuthn>
output JSON data = await navigator.credentials.create (input JSON data);

In step S2615, the web browser 314 that has received the HTML in step S2614 executes the JavaScript and accesses the URL2. At this time, it is desirable to access the URL2 by automatically executing JavaScript without a web browser operation being performed by the user. By using an onload event of JavaScript called at a timing at which the web browser 314 completes the reading of the HTML of the HTML screen 2503, it is possible to automatically execute JavaScript. Alternatively, a "passkey registration" button (not illustrated) may be displayed on the HTML screen 2503, and JavaScript may be executed upon the detection of the pressing of the "passkey registration" button by the user to allow access to the URL2.

In step S2616, the FIDO service 321 that has received the access to the URL2 performs the generation of a challenge. The challenge corresponds to random numbers.

In step S2617, input JSON data including the generated challenge is transmitted as a response. The input JSON data also includes information regarding the FIDO service 321 (e.g., address like "mfplogin.service.com") and a user ID.

Next, in step S2618, the web browser 314 executes the following JavaScript of WebAuthn using the received input JSON data, and activates the authenticator 312.
<JavaScript of WebAuthn>
output JSON data = await navigator.credentials.create (input JSON data);

Next, in step S2619, the authenticator 312 authenticates the owner of the mobile terminal 102 using any method of authentication that uses biological information, such as face authentication or fingerprint authentication, authentication that uses a passcode, or pattern authentication.

Next, in step S2620, the authenticator 312 generates a key pair (secret key and public key of PKI) called a passkey, and a credential ID for identifying a passkey. Then, the authenticator 312 stores the generated key and the credential ID into a tamper-resistant storage area in association with information regarding the FIDO service 321 (e.g., mfplogin.service.com) and the user ID.

Next, in step S2621, the authenticator 312 gives a digital signature to the data including the challenge data received in step S2617 using the generated secret key. The authenticator 312 returns the output JSON data to a web browser. The output JSON data includes the generated public key, the credential ID, and the digital signature.

Next, in step S2622, the web browser 314 accesses the URL3, and transmits the output JSON data including the public key, the credential ID and the digital signature to the FIDO service 321.

Next, in step S2623, the FIDO service 321 verifies the received digital signature. Specifically, by decoding the digital signature using the received public key, the FIDO service 321 verifies whether the digital signature is identical to the challenge issued by itself. In a case where the digital signature is identical to the challenge, it is determined that the verification of the digital signature has succeeded. In a case where the digital signature is not identical to the challenge, it is determined that the verification of the digital signature has failed. In a case where the verification of the digital signature has succeeded, then in step S2624, the FIDO service 321 stores the passkey information (public key and credential ID) and the user ID into the account information 1901 in association with each other.

Next, in step S2625, the FIDO service 321 transmits, to the web browser 314, a response indicating whether passkey registration has succeeded. In a case where passkey registration has succeeded, the FIDO service 321 transmits an HTML of a screen 2505 as a response, for example.

In the above-described flow of passkey registration, an example in which the mobile terminal 102 acquires the URL1 by reading a QR code displayed on the operation panel 205 of the MFP 101 has been described, but a method of notifying the mobile terminal 102 of the URL1 may be another method. For example, the MFP 101 may notify the mobile terminal 102 of the URL1 using short-range wireless communication, such as Bluetooth or Near Field Communication (NFC). Alternatively, the MFP login server 105 may notify the user of the URL1 using an e-mail. The user need not be present in front of the MFP 101 at the time of passkey registration. In a case where an error occurs in the sequence related to the passkey authentication to be described below, it may be determined that an access is made from a mobile terminal that has not registered passkey, and the mobile terminal may be prompted to access the URL1 for passkey registration.

### <Passkey Authentication Sequence>

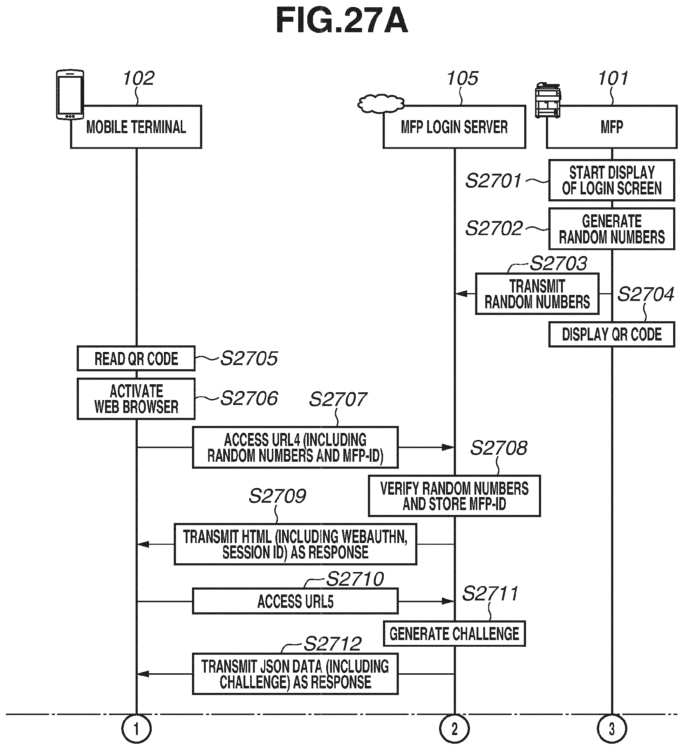

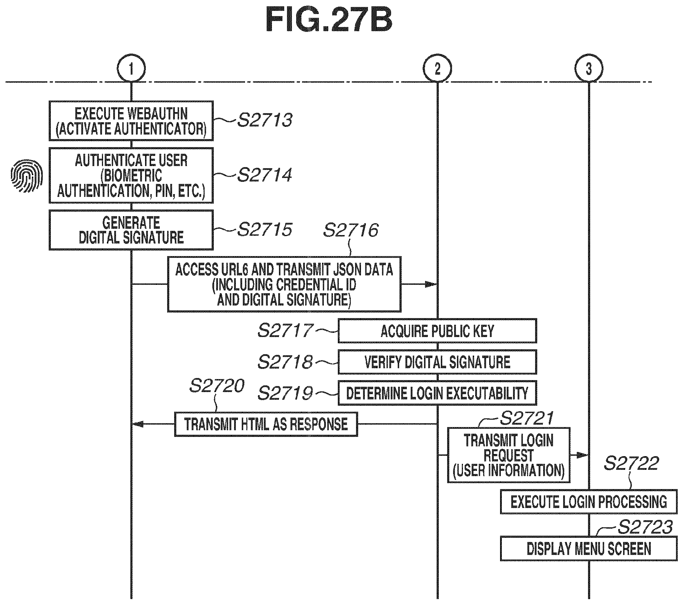

A processing flow related to passkey registration will be described with reference to Figs. 22, 25, 27A and 27B. Figs. 27A and 27B are sequence diagrams illustrating a flow of processing related to passkey registration.

In a case where the user has not executed login, then in step S2701, the operation unit login service 301 starts the display of the login screen 2201. For example, if a logged-in user executes logout, the operation unit login service 301 displays the login screen 2201. Alternatively, if the power of the MFP 101 is turned on, the operation unit login service 301 displays the login screen 2201 as an initial screen.

In step S2702, the operation unit login service 301 generates random numbers. The random numbers correspond to a character string, such as "b15dee080a1a549be6e3c74e6b59f5c5", for example.

Next, in step S2703, the operation unit login service 301 transmits the generated random numbers to the FIDO service 321 of the MFP login server 105 and shares the random numbers with the FIDO service 321. Random numbers may be generated by the FIDO service 321 or another module instead of the operation unit login service 301 and shared with the operation unit login service 301. The FIDO service 321 may generate not only random numbers but also a QR code itself and share them with the operation unit login service 301.

Next, in step S2704, the operation unit login service 301 displays a QR code on the login screen 2201. As URL parameters, data of the URL4 including the above-described random numbers and an MFP-ID of the MFP 101 is embedded into the QR code. The random numbers correspond to information known only to a person who has read the QR code image and are intended to confirm that the user who accesses the URL4 is present in front of the operation panel 205.

Next, in step S2705, the user activates the camera application 313 from the mobile terminal 102 owned by the user themselves, and reads the QR code displayed on the operation panel 205.

Next, in step S2706, the camera application 313 that has read out the URL4 from the QR code activates the web browser 314.

Next, in step S2707, the web browser 314 accesses the address of the URL4.

In step S2708, the FIDO service 321 of the MFP 101 verifies whether random numbers included in the parameters of the URL4 accessed in step S2707 are identical to the random numbers acquired in step S2703. In a case where the random numbers are not identical or in a case where random numbers are not included, an error, such as HTTP 1904 Not Found, is transmitted to the web browser 314 as response. In a case where it has been confirmed that the random numbers are identical, an MFP-ID included in the parameters of the URL4 is temporarily stored into the RAM 1703 in association with a session ID.

In step S2709, an HTML of an HTML screen 2510 for passkey authentication is transmitted as a response. The HTML for passkey authentication encompasses JavaScript for accessing a REST API of the URL5 and the URL6. The HTML also encompasses the following JavaScript of WebAuthn defined by the FIDO2.0.
<JavaScript of WebAuthn>
output JSON data = await navigator. credentials. get (input JSON data);

A header of a communication packet in step S2709 includes a session ID to be stored into a Cookie of the web browser 314. The session ID is used to confirm that the subsequent access is performed in the same session. In a case where the URL5 or the URL6 is accessed in a state in which no session ID is stored in the Cookie, it can be determined to be an unauthorized access made not through a required procedure, and the FIDO service 321 can return an error without performing requested processing.

In step S2710, the web browser 314 that has received the packet in step S2709 accesses the URL5 desirably by automatically executing JavaScript without a web browser operation being performed by the user. By using an onload event of JavaScript called at a timing at which the web browser 314 completes the reading of the HTML of the HTML screen 2510, it is possible to automatically execute JavaScript.

Alternatively, it may be accessed by displaying a "passkey authentication" button (not illustrated) on the HTML screen 2510, and JavaScript may be executed upon the detection of the pressing of the "passkey authentication" button by the user to allow access to the URL5.

In step S2711, the FIDO service 321 that has received the access to the URL5 performs the generation of a challenge. The challenge corresponds to random numbers.

Next, in step S2712, input JSON data including the generated challenge is transmitted as a response. The input JSON data also includes information regarding the FIDO service 321 (e.g., address like "mfplogin.service.com").

Next, in step S2713, the web browser 314 executes the following JavaScript of WebAuthn using the received input JSON data and activates the authenticator 312. In a case where the authenticator 312 manages a plurality of passkeys in association with the information regarding the FIDO service 321, a screen for selecting one passkey from among the plurality of passkeys may be displayed in some cases.
<JavaScript of WebAuthn>
output JSON data = await navigator.credentials.create (input JSON data);

Next, in step S2714, the authenticator 312 authenticates the owner of the mobile terminal 102 using any method of face authentication, fingerprint authentication, passcode authentication, and pattern authentication.

Next, in step S2715, the authenticator 312 acquires a passkey (secret key of PKI) stored in association with the information regarding the FIDO service 321 (e.g., mfplogin.service.com). Then, the generation of a digital signature is performed using a secret key for the data including the challenge that has received in step S2712. The authenticator 312 returns output JSON data to the web browser 314. The output JSON data includes the digital signature and a credential ID of a passkey used in generating the digital signature.

Next, in step S2716, the web browser 314 accesses the URL6, and transmits output JSON data including the public key, the credential ID and the digital signature to the FIDO service 321.

Next, in step S2717, the FIDO service 321 refers to the account information 1901, and acquires a user ID and a public key of an account associated with the received credential ID.

Next, in step S2718, the FIDO service 321 verifies the received digital signature. Specifically, by decoding the digital signature using the public key, the FIDO service 321 verifies whether the digital signature is identical to the challenge issued by itself. In a case where the digital signature is identical to the challenge, i.e., the verification of the digital signature has succeeded, it is determined that authentication has succeeded. In a case where the verification has failed, it is determined that authentication has failed.

Next, in step S2719, it is determined whether the user can log in to the MFP 101 having an MFP-ID stored in association with the session ID. Specifically, with reference to the table 1903, it is determined whether the user with the user ID which has succeeded in the authentication in step S2718 is permitted to use the MFP 101. In addition, with reference to the MFP management information 2001, it is checked whether the MFP 101 is online and whether the MFP 101 is in a ready state. In a case where the user with the user ID is permitted to use the MFP 101, and the MFP 101 is online and in the ready state, it is determined that the user can log in to the MFP 101.

In step S2720, the FIDO service 321 transmits, as a response, an HTML including a message indicating an authentication result in step S2718 and a determination result of login executability that has been obtained in step S2719. For example, in a case where the authentication has succeeded and it is determined that login is executable, the FIDO service 321 transmits an HTML of a screen 2512 as a response. In a case where the user with the user ID is not permitted to use the MFP 101, the FIDO service 321 transmits an HTML of a screen 2513 as a response.

In a case where the authentication has succeeded and it is determined that login is executable, then in step S2721, the MFP login server 105 transmits user information on an account for which the login to the MFP 101 is to be performed, to the cloud communication unit 308 of the MFP 101. The user information includes information, such as a user ID, an e-mail address, a role, and authority stored in the account information 1901.

In step S2722, the cloud communication unit 308 of the MFP 101 transmits the received user information to the login processing unit 302, and the login processing unit 302 performs login processing. The login processing unit 302 notifies the operation unit UI service 304 of a login occurrence event. The login occurrence event includes information regarding the user who is caused to execute login.

If the login processing is completed, then in step S2723, the login screen 2201 is closed and the operation unit UI service 304 displays the menu screen 2202. Then, the operation unit UI service 304 provides a function suitable for the authority given to the user. For example, control is performed in such a manner that a function on which authority is not given to the user cannot be used, by displaying the button of the function in a grayout state.

In a case where the verification has not succeeded in step S2718, or in a case where it is determined in step S2719 that login is inexecutable, the MFP login server 105 transmits a failure notification to the cloud communication unit 308 of the MFP 101. Examples of the failure include "a user ID is not registered", "a public key of a passkey is not registered in association with a user ID", "the verification of the digital signature has failed", and "authority to log in to the MFP 101 is not given". The operation unit login service 301 desirably displays an authentication failure message as in a screen 2204.

The random numbers to be stored in the QR code on the login screen 2201 are desirably updated to new random numbers in a case where an authentication success notification or an authentication failure notification is received. It is safe to shorten the lifetime of the random numbers by periodically updating the random numbers even in a case where an authentication success notification or an authentication failure notification is not received.

In the above-described flow of passkey authentication, an example in which the mobile terminal 102 acquires the URL4 and the random numbers by reading the QR code displayed on the operation panel 205 of the MFP 101 has been described, but a method of notifying the mobile terminal 102 of the URL4 may be another method. For example, the MFP 101 may notify the mobile terminal 102 of the URL4 using short-range wireless communication, such as Bluetooth or NFC.

### <Effect>

As described above, by using the present embodiment, it is possible to authenticate a user via an external server having the signature verification technique, and provide a system for giving a permission to use an operation panel (operation unit) of an image forming apparatus.

Because the present embodiment allows a user to log in to an operation panel using a biometric authentication function of a mobile terminal owned by the user, it is possible to provide password-less login without additional cost of an IC card reading device.

In the conventional technique, there has been a possibility that an encrypted password leaks out to a network, and there has been also a risk of password leakage attributed to code-breaking. In the present embodiment, the digital signature verification technique used in the FIDO is used, and thus, there is less chance that a password leaks out to a network or a password leaks out due to wiretapping by a third party, whereby a safe login method can be provided.

The external server having the signature verification technique can collectively manage a plurality of users, public keys registered from mobile terminals of the users, and a plurality of MFPs.

By registering a public key only once from a mobile terminal on the external server having the signature verification technique, a user becomes able to log in to a plurality of image forming apparatuses, which is convenient for the user.

An administrator can perform the management of users and the management of image forming apparatuses on an external server having the signature verification technique, which provides high manageability.

By using the technique of the present embodiment, a mobile terminal and an image forming apparatus need not directly communicate with each other, and preconfiguration or a set-up and an infrastructure (LAN, direct communication) for the mobile terminal and the image forming apparatus to directly communicate with each other are not required. Thus, the burden of preconfiguration or a set-up can be reduced. The present embodiment can also be applied to an image forming apparatus installed in an office without a LAN or a location where a large indefinite number of users use the image forming apparatus, such as a convenience store.

By using the technique of the present embodiment, an image forming apparatus needs not have a FIDO client function and needs not include an authenticator. Thus, development cost for implementing the client function and the authenticator on the image forming apparatus is not required. By using a QR code as in the present embodiment, a short-range wireless communication device compliant with Bluetooth or NFC is not required. By using the technique of the present embodiment, it is possible to provide a comparatively inexpensive image forming apparatus that can provide a safe login method.

A mobile terminal has a function of reading a QR code using a camera of the mobile terminal, activating a standard browser, and accessing a URL embedded in the QR code. Thus, a dedicated mobile application needs not be installed, and this function can be used only by a standard camera and a standard browser provided in the mobile terminal.

In the third embodiment, an example of using a standard camera and a standard browser provided in a mobile terminal has been described.

As a fourth embodiment, instead of using a standard web browser and a camera application of the mobile terminal 102, an MFP application may be used. Specifically, an MFP application installable on the mobile terminal 102 may be provided by a vendor, and this MFP application may be used for login to the MFP 101.

The advantage of the use of the MFP application lies in that authentication can be performed by accessing the MFP login server 105 more quickly than the case of activating a standard camera application and reading a QR code. As another advantage, due to the MFP application having a function of generating a key pair and creating a digital signature, a mobile terminal that does not even support a web browser, WebAuthn, or FIDO can use the technique of the present embodiment. The MFP application needs not comply with the standard of FIDO.

Fig. 28 illustrates an example of an operation screen to be displayed on the mobile terminal 102 in a case where the MFP application is used.

If the MFP application is activated, the MFP application communicates with the MFP login server 105, acquires information regarding an MFP 101 that is registered on the MFP login server 105, and displays an MFP list on the operation panel 215 of the mobile terminal 102 as in a screen 2801. MFPs usually used by the user may be pre-registered as favorite MFPs, and the favorite MFPs may be preferentially displayed.

If it is detected that the user has selected an MFP, a screen 2802 for entering a PIN code is displayed. On the MFP login screen, a PIN code is displayed in place of the QR code. The user visually checks the PIN code displayed on the MFP login screen and enters the PIN code on the screen 2802. The entered PIN code is transmitted to the MFP login server 105, and the MFP login server 105 checks whether the entered PIN code is identical to the PIN code displayed on the MFP login screen. It is accordingly confirmed that the user is present in front of the MFP.

Next, the MFP application activates a biometric authentication function using an API provided by an OS of the mobile terminal 102, and authenticates the user.

In a case where the biometric authentication has succeeded, the MFP application gives a digital signature to a challenge acquired from the MFP login server 105 and transmits the digital signature to the MFP login server 105. In a case where the biometric authentication has failed, the MFP application does not transmit the digital signature. With this system, in a case where the MFP application transmits a digital signature, it is assured that biometric authentication has been performed in advance on the mobile terminal 102.

The MFP login server verifies the received digital signature, thereby being able to confirm that the mobile terminal 102 is a legitimate mobile terminal having a secret key forming a pair with a public key pre-registered by the MFP application of the mobile terminal 102.

The above-described PIN code checking function may be omitted. In this case, because whether a user who performs a mobile operation is present in front of the MFP 101 cannot be confirmed, the user is permitted to log in to the operation panel 205 of the MFP 101 from a remote location. Because a legitimate user has no advantage in logging in to the operation panel 205 of the MFP 101 from a remote location, there is no great security-related concern. In consideration of a case where the user mistakenly logs in to the MFP 101, it is desirable to enable the user to log out from the operation panel 205 of the MFP 101 by using a system similar to the system of login, using the MFP application.

In the third embodiment, the description has been given of an example in which a user ID is not specifically handled on a login screen of an operation panel (operation unit) of an MFP, and a user for whom passkey registration and passkey authentication are to be performed is identified through communication between the mobile terminal and the MFP login server.

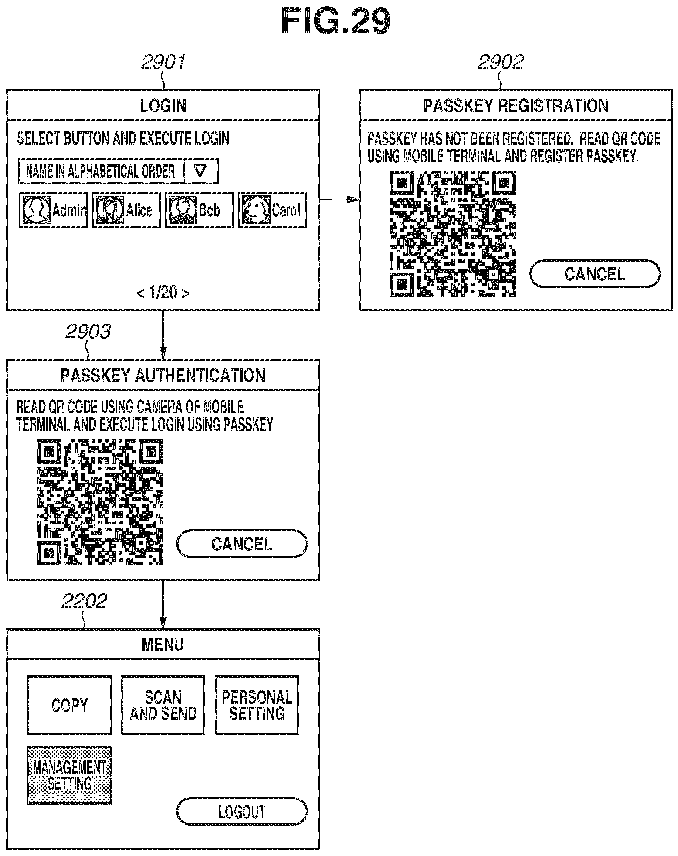

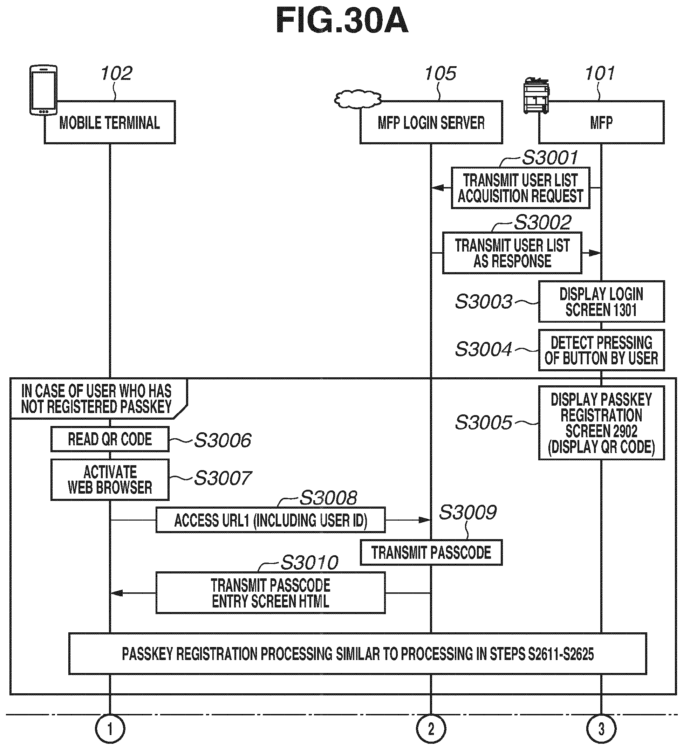

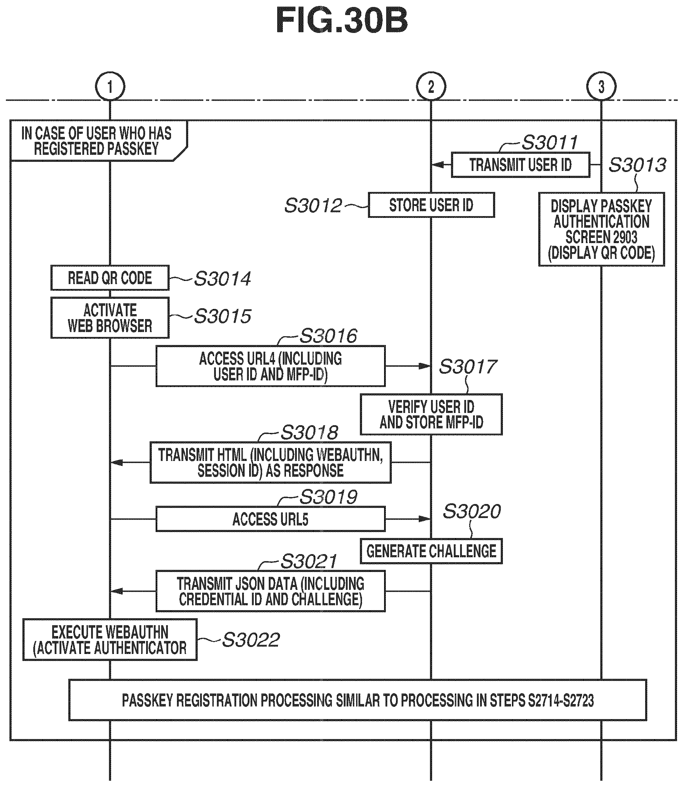

In a fifth embodiment, an example in which communication between the mobile terminal and the MFP login server is started after a user for whom passkey registration and passkey authentication are to be performed is identified on a login screen of an operation panel of an MFP will be described with reference to Figs. 29, 30A and 30B.

Fig. 29 is a diagram illustrating an example of a user interface to be displayed on an operation panel of an MFP according to the fifth embodiment.

Figs. 30A and 30B are sequence diagrams illustrating a flow of processing for passkey registration and passkey authentication according to the fifth embodiment.

Before displaying a login screen, in step S3001, the MFP 101 transmits a request for a list of users who can use the MFP 101, to the MFP login server 105.

In step S3002, referring to the account information 1901 and the table 1903 indicating association of users and MFPs that can be used by the users, the MFP login server 105 transmits, as a response, a list of users who can use the MFP 101. The user list desirably includes information indicating whether a passkey is registered.

Next, in step S3003, the MFP 101 displays a login screen 2901. On the login screen 2901, a list of users who can use the MFP 101 is displayed in a button format. A "user ID", a "display name associated with a user ID", and an "icon image associated with a user ID" may be displayed on each button.

In step S3004, the press of any user button representing a user that is displayed on the login screen 2901 is detected, and a user ID associated with the pressed user button is identified.

The MFP 101 determines whether the pressed user button is a button representing a user who has registered a passkey.

In a case where the pressed user button is a button representing a user who has not registered a passkey, then in step S3005, a passkey registration screen 2902 is displayed. On the passkey registration screen 2902, a QR code storing the following URL1 including the identified user ID as a URL parameter is displayed.

### https://mfplogin.service.com/registration?uid=Alice

Next, in step S3006, the user activates the camera application 313 from the mobile terminal 102 owned by the user themselves, and reads the QR code displayed on the operation panel 205.

Next, in step S3007, the camera application 313 that has read out the URL1 from the QR code activates the web browser 314.

In step S3008, the web browser 314 accesses the address of the URL1. Unlike the first embodiment, URL parameters at the first access to the URL1 include a user ID read out from the QR code.

In step S3009, the MFP login server 105 transmits a passcode to an e-mail address stored in association with the acquired user ID. The MFP login server 105 may prompt the user to pre-register a telephone number of the mobile terminal 102 and transmit the passcode in a short message instead of an e-mail.

In step S3010, the FIDO service 321 returns the HTML of the screen 2502 for entering a passcode, together with the issued session ID.

The subsequent processing is similar to the processing in steps S2611 to S2625 described in the third embodiment.

In a case where the button pressed in step S3004 is a button representing a user who has registered a passkey, then in step S3011, the MFP 101 transmits the identified user ID to the MFP login server 105.

In step S3012, the MFP login server 105 temporarily stores the received user ID into the RAM 1703.

In step S3013, the MFP 101 displays a passkey authentication screen 2903 on the operation panel 205. On the passkey authentication screen 2903, a QR code storing the following URL4 including the identified user ID and an MFP-ID as URL parameters is displayed.
https://mfplogin.service.com/authentication?uid=Alice&MFP-ID=the MFP 101

Next, in step S3014, the user activates the camera application 313 from the mobile terminal 102 owned by the user themselves, and reads the QR code displayed on the operation panel 205.

Next, in step S3015, the camera application 313 that has read out the URL4 from the QR code activates the web browser 314.

In step S3016, the web browser 314 accesses the address of the URL4. Unlike the first embodiment, URL parameters at the first access to the URL4 include a user ID read out from the QR code.

In step S3017, the FIDO service 321 of the MFP 101 verifies whether the user ID included in the parameters of the URL4 accessed in step S2707 is identical to the user ID temporarily stored in step S3012. In a case where the user IDs are not identical or in a case where a user ID is not included, an error is transmitted to the web browser 314 as a response.

In a case where it has been confirmed that the user IDs are identical, the MFP-ID included in the parameters of the URL4 is temporarily stored into the RAM 1703 in association with a session ID.

In step S3018, the HTML of the HTML screen 2510 for passkey authentication is transmitted as a response. The HTML for passkey authentication encompasses JavaScript for accessing a REST API of the URL5 and the URL6. The HTML also encompasses the JavaScript of WebAuthn defined by the FIDO2.0.

A header of a communication packet in step S3018 includes a session ID to be stored into the Cookie of the web browser 314. The session ID is used to confirm that the subsequent access is performed in the same session.

In step S3019, the web browser 314 that has received the packet in step S3018 accesses the URL5 by executing JavaScript.

In step S3020, the FIDO service 321 that has received the access to the URL5 performs the generation of a challenge. The challenge corresponds to random numbers.

Next, in step S3021, input JSON data including the generated challenge is transmitted as a response. The input JSON data also includes information regarding the FIDO service 321 (e.g., address like "mfplogin.service.com"). The input JSON data further includes a credential ID associated with the user ID temporarily stored in step S3012.

Next, in step S3022, the web browser 314 executes the following JavaScript of WebAuthn using the received input JSON data and activates the authenticator 312. The authenticator 312 generates a digital signature using a secret key corresponding to the credential ID included in the input JSON data. In a case where a secret key corresponding to the credential ID does not exist, an error is transmitted as a response.

The subsequent processing is similar to the processing in steps S2714 to S2723 described in the third embodiment. Nevertheless, in step S3012, control is performed not to accept authentication of a user ID other than the temporarily-stored user ID.

In the process of acquiring a public key in step S2717, in a case where the credential ID included in the output JSON data transmitted in step S2716 is not a credential ID corresponding to the temporarily-stored user ID, acquisition of a public key is not performed, and an error is transmitted as a response. In other words, control is performed not to accept authentication of a user other than the user associated with the button pressed in step S3004.

In a case where a cancel button is pressed on the passkey authentication screen 2903, or in a case where timeout occurs, it is desirable that the MFP 101 returns the screen on the operation panel to the login screen 2901, and notifies the MFP login server 105 of the cancellation.

With the above-described configuration, because it is possible to register a passkey by selecting a user on an operation panel of an MFP, the user does not feel bothersome to enter a user ID, which enhances usability.

Because only a user who has selected a user on an operation panel of an MFP can log in to the operation panel of the MFP through passkey authentication, it is possible to prevent an unauthorized login request to the operation panel of the MFP from a remote location, whereby a safe login method can be provided.

In a case where the MFP application of the mobile terminal described in the fourth embodiment is used in combination, QR code reading needs not be always performed. On the operation panel of the MFP, after a user is selected by pressing a button representing the user, an MFP to which the user is to log in is selected from the MFP application of the mobile terminal, and passkey authentication can be started. If it is confirmed that a credential ID of a passkey of the user selected on the operation panel of the MFP, and a credential ID of a passkey used in the generation of a digital signature on the mobile terminal are identical, the user may be permitted to log in to the operation panel of the MFP.

### <Other Embodiments>

The operation unit login service 301 of the MFP 101 may include a WebView (UI component having a web browser function). Then, a login screen created based on an HTML acquired from the MFP login server 105 through HTTPS communication with the MFP login server 105 may be displayed as a login screen of the operation panel 205 of the MFP 101. In this case, the MFP login server 105 provides an HTML of a screen equivalent to the login screen 2201, the passkey registration screen 2206, the login screen 2901, the passkey registration screen 2902, or the passkey authentication screen 2903. The MFP login server 105 can thereby detect, in real time, the operation unit status of each MFP and a user operation.

The present invention can also be implemented by processing of supplying a program for implementing one or more functions of the above-described embodiments, to a system or an apparatus via a network or a storage medium and causing one or more processors in a computer of the system or the apparatus to read and execute the program. The present invention can also be implemented by a circuit (e.g., an application specific integrated circuit (ASIC) or a Field Programmable Gate Array (FPGA)) that implements one or more functions.

According to the image forming apparatus according to an embodiment of the present invention, it is possible to provide a system for verifying data signed on a terminal, on the image forming apparatus.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present invention has been described with reference to embodiments, it is to be understood that the invention is not limited to the disclosed embodiments. The scope of the following claims is to be accorded the broadest interpretation so as to encompass all such modifications and equivalent structures and functions.

## Claims

1. An image forming apparatus (101) configured to communicate with a terminal (102) having an authentication function, the image forming apparatus (101) comprising:
at least one memory (202, 2030, 204) storing at least one program; and
at least one processor (201),
wherein the at least one processor (201) reads the at least one program from the at least one memory (202, 2030, 204) and executes the at least one program to cause the image forming apparatus (101) to:
transmit, to the terminal (102), verification data for performing user authentication for the image forming apparatus (101);
receive, from the terminal (102), signature data obtained by encrypting the verification data using a secret key corresponding to authentication in the authentication function of the terminal, based on execution of the authentication; and
perform verification of the received signature data using the verification data and a public key corresponding to the secret key,
wherein, in a case where the verification has succeeded, a function that is premised on the user authentication is provided.

2. The image forming apparatus (101) according to claim 1,
wherein the image forming apparatus (101) is an image forming apparatus including a printer (206), and
wherein, in a case where the verification has succeeded, as a function that is premised on the user authentication, a print function to be executed by the printer (206) with a predetermined print setting is provided.

3. The image forming apparatus (101) according to claim 1,
wherein the image forming apparatus (101) is an image forming apparatus including a scanner (207), and
wherein, in a case where the verification has succeeded, as a function that is premised on the user authentication, a function of transmitting image data obtained by scanning executed by the scanner (207) to an external apparatus is provided.

4. The image forming apparatus (101) according to claim 3,
wherein, in a case where the verification has succeeded, as a function that is premised on the user authentication, a function of selecting and designating a transmission destination from an address book when designating a transmission destination of image data obtained by scanning executed by the scanner (207) is provided.

5. The image forming apparatus (101) according to claim 1,
wherein the image forming apparatus (101) is an image forming apparatus including a printer (206) and a scanner (207), and
wherein, in a case where the verification has succeeded, as a function that is premised on the user authentication, a function of performing settings related to printing to be executed using the printer (206) and scanning to be executed by the scanner (207) is provided.

6. The image forming apparatus (101) according to claim 1,
wherein the public key corresponding to the secret key is registered on the image forming apparatus (101), and
wherein the verification is performed using the registered public key.

7. The image forming apparatus (101) according to claim 6,
wherein the at least one processor (201) further causes the image forming apparatus (101) to:
transmit, to the terminal (102), verification data for registration of the public key;
and
receive, from the terminal (102), the public key corresponding to the secret key that has been generated based on execution of the authentication in the authentication function of the terminal, and signature data for registration obtained by encrypting the verification data for registration using the secret key,
wherein, in a case where verification of the signature data for registration that uses the verification data for registration and the received public key has succeeded, the received public key is registered on the image forming apparatus (101).

8. The image forming apparatus (101) according to claim 6,
wherein the public key is registered in association with user information on a user who uses the image forming apparatus (101).

9. The image forming apparatus (101) according to claim 1,
wherein the at least one processor (201) further causes the image forming apparatus (101) to:
display, on an operation panel (205) of the image forming apparatus (101), a quick response (QR) code including information regarding a uniform resource locator (URL) for accessing the image forming apparatus (101); and
transmit the verification data to the terminal (102) if access to the URL from the terminal is detected.

10. The image forming apparatus (101) according to claim 1, wherein the at least one processor (201) further causes the image forming apparatus (101) to receive a user operation of selecting a method for performing the user authentication, from among options including a method that uses the public key and a method that uses a password entered by a user.

11. The image forming apparatus (101) according to claim 1, wherein the authentication function of the terminal (102) is a function of authenticating biological information.

12. The image forming apparatus (101) according to claim 1,
wherein the at least one processor (201) further causes the image forming apparatus (101) to:
receive selection of an icon representing a user; and
perform the verification using the verification data and a public key managed in association with the user represented by the selected icon as the public key corresponding to the secret key.

13. A control method of an image forming apparatus (101) configured to communicate with a terminal (102) having an authentication function, the control method comprising:
transmitting, to the terminal (102), verification data for performing user authentication for the image forming apparatus (101);
receiving, from the terminal (102), signature data obtained by encrypting the verification data using a secret key corresponding to authentication in the authentication function of the terminal (102), based on execution of the authentication; and
performing verification of the received signature data using the verification data and a public key corresponding to the secret key,
wherein, in a case where the verification has succeeded, a function that is premised on the user authentication is provided.

14. A program for causing an image forming apparatus (101) configured to communicate with a terminal (102) having an authentication function to functions as:
transmission means (208) for transmitting, to the terminal (102), verification data for performing user authentication for the image forming apparatus (101);
receiving means (208) for receiving, from the terminal (101), signature data obtained by encrypting the verification data using a secret key corresponding to authentication in the authentication function of the terminal, based on execution of the authentication; and
verification means (201) for performing verification of the received signature data using the verification data and a public key corresponding to the secret key,
wherein, in a case where the verification has succeeded, a function that is premised on the user authentication is provided.

## Patentansprüche

1. Bilderzeugungsvorrichtung (101), die konfiguriert ist, mit einem Endgerät (102) zu kommunizieren, das eine Authentifizierungsfunktion aufweist, wobei die Bilderzeugungsvorrichtung (101) umfasst:
mindestens einen Speicher (202, 2030, 204), der mindestens ein Programm speichert; und
mindestens einen Prozessor (201),
wobei der mindestens eine Prozessor (201) das mindestens eine Programm aus dem mindestens einen Speicher (202, 2030, 204) liest und das mindestens eine Programm ausführt, um die Bilderzeugungsvorrichtung (101) zu veranlassen zum:
Übertragen, an das Endgerät (102), von Verifizierungsdaten zum Durchführen einer Benutzerauthentifizierung für die Bilderzeugungsvorrichtung (101);
Empfangen von Signaturdaten vom Endgerät (102), die durch Verschlüsseln der Verifizierungsdaten unter Verwendung eines geheimen Schlüssels erhalten werden, der einer Authentifizierung in der Authentifizierungsfunktion des Endgeräts entspricht, basierend auf einer Ausführung der Authentifizierung; und
Durchführen einer Verifizierung der empfangenen Signaturdaten unter Verwendung der Verifizierungsdaten und eines öffentlichen Schlüssels, der dem geheimen Schlüssel entspricht,
wobei, falls die Verifizierung erfolgreich war, eine Funktion bereitgestellt wird, die auf der Benutzerauthentifizierung beruht.

2. Bilderzeugungsvorrichtung (101) nach Anspruch 1,
wobei die Bilderzeugungsvorrichtung (101) eine Bilderzeugungsvorrichtung ist, die einen Drucker (206) beinhaltet, und
wobei, falls die Verifizierung erfolgreich war, als eine Funktion, die auf der Benutzerauthentifizierung beruht, eine Druckfunktion bereitgestellt wird, die durch den Drucker (206) mit einer vorbestimmten Druckeinstellung auszuführen ist.

3. Bilderzeugungsvorrichtung (101) nach Anspruch 1,
wobei die Bilderzeugungsvorrichtung (101) eine Bilderzeugungsvorrichtung ist, die einen Scanner (207) beinhaltet, und
wobei, falls die Verifizierung erfolgreich war, als eine Funktion, die auf der Benutzerauthentifizierung beruht, eine Funktion zum Übertragen von Bilddaten, die durch vom Scanner (207) ausgeführtes Scannen erhalten werden, an eine externe Vorrichtung bereitgestellt wird.

4. Bilderzeugungsvorrichtung (101) nach Anspruch 3,
wobei, falls die Verifizierung erfolgreich war, als eine Funktion, die auf der Benutzerauthentifizierung beruht, eine Funktion zum Auswählen und Bezeichnen eines Übertragungsziels aus einem Adressbuch beim Bezeichnen eines Übertragungsziels von Bilddaten, die durch vom Scanner (207) ausgeführtes Scannen erhalten werden, bereitgestellt wird.

5. Bilderzeugungsvorrichtung (101) nach Anspruch 1,
wobei die Bilderzeugungsvorrichtung (101) eine Bilderzeugungsvorrichtung ist, die einen Drucker (206) und einen Scanner (207) beinhaltet, und
wobei, falls die Verifizierung erfolgreich war, als eine Funktion, die auf der Benutzerauthentifizierung beruht, eine Funktion zum Durchführen von Einstellungen in Bezug auf unter Verwendung des Druckers (206) auszuführendes Drucken und vom Scanner (207) auszuführendes Scannen bereitgestellt wird.

6. Bilderzeugungsvorrichtung (101) nach Anspruch 1,
wobei der öffentliche Schlüssel, der dem geheimen Schlüssel entspricht, auf der Bilderzeugungsvorrichtung (101) registriert wird, und
wobei die Verifizierung unter Verwendung des registrierten öffentlichen Schlüssels durchgeführt wird.

7. Bilderzeugungsvorrichtung (101) nach Anspruch 6,
wobei der mindestens eine Prozessor (201) ferner die Bilderzeugungsvorrichtung (101) veranlasst zum:
Übertragen, an das Endgerät (102), von Verifizierungsdaten zur Registrierung des öffentlichen Schlüssels; und
Empfangen, vom Endgerät (102), des öffentlichen Schlüssels, der dem geheimen Schlüssel entspricht, der basierend auf der Ausführung der Authentifizierung in der Authentifizierungsfunktion des Endgeräts erzeugt wurde, und von Signaturdaten zur Registrierung, die durch Verschlüsseln der Verifizierungsdaten zur Registrierung unter Verwendung des geheimen Schlüssels erhalten werden,
wobei, falls die Verifizierung der Signaturdaten zur Registrierung, die die Verifizierungsdaten zur Registrierung und den empfangenen öffentlichen Schlüssel verwenden, erfolgreich war, der empfangene öffentliche Schlüssel auf der Bilderzeugungsvorrichtung (101) registriert wird.

8. Bilderzeugungsvorrichtung (101) nach Anspruch 6,
wobei der öffentliche Schlüssel in Verbindung mit Benutzerinformationen über einen Benutzer registriert wird, der die Bilderzeugungsvorrichtung (101) verwendet.

9. Bilderzeugungsvorrichtung (101) nach Anspruch 1,
wobei der mindestens eine Prozessor (201) ferner die Bilderzeugungsvorrichtung (101) veranlasst zum:
Anzeigen, auf einem Bedienfeld (205) der Bilderzeugungsvorrichtung (101), eines Quick-Response- (QR-) Codes, der Informationen bezüglich eines Uniform Resource Locator (URL) zum Zugreifen auf die Bilderzeugungsvorrichtung (101) beinhaltet; und
Übertragen der Verifizierungsdaten an das Endgerät (102), wenn Zugriff auf den URL vom Endgerät detektiert wird.

10. Bilderzeugungsvorrichtung (101) nach Anspruch 1, wobei der mindestens eine Prozessor (201) ferner die Bilderzeugungsvorrichtung (101) veranlasst, eine Benutzerbedienung zu empfangen zum Auswählen eines Verfahrens zum Durchführen der Benutzerauthentifizierung aus Optionen, die ein Verfahren, das den öffentlichen Schlüssel verwendet, und ein Verfahren, das ein von einem Benutzer eingegebenes Passwort verwendet, beinhalten.

11. Bilderzeugungsvorrichtung (101) nach Anspruch 1, wobei die Authentifizierungsfunktion des Endgeräts (102) eine Funktion zum Authentifizieren biologischer Informationen ist.

12. Bilderzeugungsvorrichtung (101) nach Anspruch 1,
wobei der mindestens eine Prozessor (201) ferner die Bilderzeugungsvorrichtung (101) veranlasst zum:
Empfangen einer Auswahl eines Symbols, das einen Benutzer darstellt; und
Durchführen der Verifizierung unter Verwendung der Verifizierungsdaten und eines öffentlichen Schlüssels, der in Verbindung mit dem durch das ausgewählte Symbol dargestellten Benutzer verwaltet wird, als den dem geheimen Schlüssel entsprechenden öffentlichen Schlüssel.

13. Steuerverfahren einer Bilderzeugungsvorrichtung (101), die konfiguriert ist, mit einem Endgerät (102) zu kommunizieren, das eine Authentifizierungsfunktion aufweist, wobei das Steuerverfahren umfasst:
Übertragen, an das Endgerät (102), von Verifizierungsdaten zum Durchführen einer Benutzerauthentifizierung für die Bilderzeugungsvorrichtung (101);
Empfangen, vom Endgerät (102), von Signaturdaten, die durch Verschlüsseln der Verifizierungsdaten unter Verwendung eines geheimen Schlüssels erhalten werden, der einer Authentifizierung in der Authentifizierungsfunktion des Endgeräts (102) entspricht, basierend auf der Ausführung der Authentifizierung; und
Durchführen einer Verifizierung der empfangenen Signaturdaten unter Verwendung der Verifizierungsdaten und eines dem geheimen Schlüssel entsprechenden öffentlichen Schlüssels,
wobei, falls die Verifizierung erfolgreich war, eine Funktion bereitgestellt wird, die auf der Benutzerauthentifizierung beruht.

14. Programm zum Veranlassen einer Bilderzeugungsvorrichtung (101), die konfiguriert ist, mit einem eine Authentifizierungsfunktion aufweisenden Endgerät (102) zu kommunizieren, zu funktionieren als:
Übertragungseinrichtung (208) zum Übertragen, an das Endgerät (102), von Verifizierungsdaten zum Durchführen einer Benutzerauthentifizierung für die Bilderzeugungsvorrichtung (101);
Empfangseinrichtung (208) zum Empfangen, vom Endgerät (101), von Signaturdaten, die durch Verschlüsseln der Verifizierungsdaten unter Verwendung eines geheimen Schlüssels erhalten werden, der einer Authentifizierung in der Authentifizierungsfunktion des Endgeräts entspricht, basierend auf der Ausführung der Authentifizierung; und
Verifizierungseinrichtung (201) zum Durchführen einer Verifizierung der empfangenen Signaturdaten unter Verwendung der Verifizierungsdaten und eines öffentlichen Schlüssels, der dem geheimen Schlüssel entspricht,
wobei, falls die Verifizierung erfolgreich war, eine Funktion bereitgestellt wird, die auf der Benutzerauthentifizierung beruht.

## Revendications

1. Appareil de formation d'images (101) configuré pour communiquer avec un terminal (102) ayant une fonction d'authentification, l'appareil de formation d'images (101) comprenant :
au moins une mémoire (202, 2030, 204) stockant au moins un programme ; et
au moins un processeur (201),
dans lequel ledit au moins un processeur (201) lit ledit au moins un programme dans ladite au moins une mémoire (202, 2030, 204) et exécute ledit au moins un programme pour faire réaliser par l'appareil de formation d'images (101) les opérations suivantes :
transmettre au terminal (102) des données de vérification pour réaliser une authentification d'utilisateur pour l'appareil de formation d'images (101) ;
recevoir du terminal (102) des données de signature obtenues en cryptant les données de vérification en utilisant une clé secrète correspondant à l'authentification dans la fonction d'authentification du terminal, basée sur l'exécution de l'authentification ; et
réaliser une vérification des données de signature reçues en utilisant les données de vérification et une clé publique correspondant à la clé secrète,
dans lequel, dans le cas où la vérification a réussi, une fonction qui repose sur l'authentification de l'utilisateur est fournie.

2. Appareil de formation d'images (101) selon la revendication 1,
dans lequel l'appareil de formation d'images (101) est un appareil de formation d'images comportant une imprimante (206), et
dans lequel, dans le cas où la vérification a réussi, comme fonction qui repose sur l'authentification de l'utilisateur, une fonction d'impression à exécuter par l'imprimante (206) avec un réglage d'impression prédéterminé est fournie.

3. Appareil de formation d'images (101) selon la revendication 1,
dans lequel l'appareil de formation d'images (101) est un appareil de formation d'images comportant un scanneur (207), et
dans lequel, dans le cas où la vérification a réussi, comme fonction qui repose sur l'authentification de l'utilisateur, une fonction de transmission de données d'image obtenues par une numérisation exécutée par le scanneur (207) à un appareil externe est fournie.

4. Appareil de formation d'images (101) selon la revendication 3, dans lequel, dans le cas où la vérification a réussi, comme fonction qui repose sur l'authentification de l'utilisateur, une fonction de sélection et de désignation d'une destination de transmission dans un carnet d'adresses lors de la désignation d'une destination de transmission de données d'images obtenues par une numérisation exécutée par le scanneur (207) est fournie.

5. Appareil de formation d'images (101) selon la revendication 1,
dans lequel l'appareil de formation d'images (101) est un appareil de formation d'images comportant une imprimante (206) et un scanneur (207), et
dans lequel, dans le cas où la vérification a réussi, comme fonction qui repose sur l'authentification de l'utilisateur, une fonction de réalisation de réglages se rapportant à l'impression à exécuter en utilisant l'imprimante (206) et à la numérisation devant être exécutée par le scanneur (207) est fournie.

6. Appareil de formation d'images (101) selon la revendication 1,
dans lequel la clé publique correspondant à la clé secrète est enregistrée sur l'appareil de formation d'images (101), et
dans lequel la vérification est réalisée en utilisant la clé publique enregistrée.

7. Appareil de formation d'images (101) selon la revendication 6, dans lequel ledit au moins un processeur (201) fait en outre réaliser par l'appareil de formation d'images (101) les opérations suivantes :
transmettre au terminal (102) des données de vérification pour l'enregistrement de la clé publique ; et
recevoir du terminal (102) la clé publique correspondant à la clé secrète qui a été générée en se basant sur l'exécution de l'authentification dans la fonction d'authentification du terminal, et des données de signature pour enregistrement obtenues en cryptant les données de vérification pour enregistrement en utilisant la clé secrète,
dans lequel, dans le cas où la vérification des données de signature pour enregistrement qui utilise les données de signature pour enregistrement et la clé publique a réussi, la clé publique reçue est enregistrée sur l'appareil de formation d'images (101).

8. Appareil de formation d'images (101) selon la revendication 6, dans lequel la clé publique est enregistrée en association avec des informations d'utilisateur sur un utilisateur qui utilise l'appareil de formation d'images (101).

9. Appareil de formation d'images (101) selon la revendication 1,
dans lequel ledit au moins un processeur (201) fait en outre réaliser par l'appareil de formation d'images (101) les opérations suivantes :
afficher, sur un tableau de commande (205) de l'appareil de formation d'images (101), un code à réponse rapide (QR) comportant des informations concernant une adresse universelle (URL) pour accéder à l'appareil de formation d'images (101) ; et
transmettre les données de vérification au terminal (102) si l'accès à l'adresse universelle depuis le terminal est détecté.

10. Appareil de formation d'images (101) selon la revendication 1, dans lequel ledit au moins un processeur (201) fait en outre recevoir par l'appareil de formation d'images (101) une opération de l'utilisateur consistant à sélectionner un procédé pour réaliser l'authentification de l'utilisateur, parmi des options incluant un procédé qui utilise la clé publique et un procédé qui utilise un mot de passe entré par un utilisateur.

11. Appareil de formation d'images (101) selon la revendication 1, dans lequel la fonction d'authentification du terminal (102) est une fonction consistant à authentifier des informations biologiques.

12. Appareil de formation d'images (101) selon la revendication 1,
dans lequel ledit au moins un processeur (201) fait en outre réaliser par l'appareil de formation d'images (101) les opérations suivantes :
recevoir une sélection d'une icône représentant un utilisateur ; et
réaliser la vérification en utilisant les données de vérification et une clé publique gérée en association avec l'utilisateur représenté par l'icône sélectionnée en tant que clé publique correspondant à la clé secrète.

13. Procédé de commande d'un appareil de formation d'images (101) configuré pour communiquer avec un terminal (102) ayant une fonction d'authentification, le procédé de commande comprenant les étapes suivantes :
transmettre au terminal (102) des données de vérification pour réaliser une authentification d'utilisateur pour l'appareil de formation d'images (101) ;
recevoir du terminal (102) des données de signature obtenues en cryptant les données de vérification en utilisant une clé secrète correspondant à l'authentification dans la fonction d'authentification du terminal (102), basée sur l'exécution de l'authentification ; et
réaliser une vérification des données de signature reçues en utilisant les données de vérification et une clé publique correspondant à la clé secrète,
dans lequel, dans le cas où la vérification a réussi, une fonction qui repose sur l'authentification de l'utilisateur est fournie.

14. Programme destiné à faire fonctionner un appareil de formation d'images (101) configuré pour communiquer avec un terminal (102) ayant une fonction d'authentification en tant que :
moyen de transmission (208) pour transmettre au terminal (102) des données de vérification pour réaliser une authentification d'utilisateur pour l'appareil de formation d'images (101) ;
un moyen de réception (208) pour recevoir du terminal (101) des données de signature obtenues en cryptant les données de vérification en utilisant une clé secrète correspondant à l'authentification dans la fonction d'authentification du terminal, basée sur l'exécution de l'authentification ; et
un moyen de vérification (201) pour réaliser une vérification des données de signature reçues en utilisant les données de vérification et une clé publique correspondant à la clé secrète,
dans lequel, dans le cas où la vérification a réussi, une fonction qui repose sur l'authentification de l'utilisateur est fournie.
